# EUROPEAN PATENT APPLICATION

(11) **EP 4 586 093 A1**
(43) Date of publication of application: **16.07.2025**
(21) Application number: 25151738.9
(22) Date of filing: 14.01.2025
(51) Int. Cl.: G06F 9/50, G06F 8/656, G06F 9/455, G06F 9/54

(54) **SIGNAL PROCESSING DEVICE AND VEHICLE DISPLAY APPARATUS INCLUDING THE SAME**

(30) Priority: 15.01.2024 WO PCT/KR2024/000726
(71) Applicant: LG Electronics Inc., Yeongdeungpo-gu Seoul 07336 (KR)
(72) Inventor: LEE, Chulhee, Seoul 08592 (KR); KIM, Yonghyun, Seoul 08592 (KR)
(74) Representative: Vossius & Partner Patentanwälte Rechtsanwälte mbB

(57) **Abstract**

A signal processing device and a vehicle display apparatus including the same according to an embodiment of the present disclosure include: a processor configured to execute a first application, wherein the processor is configured to execute each of a plurality of microservices to execute the first application, to update a second microservice corresponding to a duplication of the first microservice to update the first microservice during an operation of the first microservice among the plurality of microservices, to distribute a load to each of the first microservice and the second microservice after completion of the update of the second microservice and control the operation of the first microservice and the second microservice.

## Description

### BACKGROUND

### 1. Technical Field

. The present disclosure relates to a signal processing device and a vehicle display apparatus including the same, and more particularly, to a signal processing device capable of performing an update of an application while the application is running, and a vehicle display apparatus including the same.

### 2. Description of the Related Art

. A vehicle is a machine that allows a user to move in a desired direction. A typical example of the vehicle is an automobile.

. Meanwhile, a signal processing device for vehicles is mounted in the vehicle for convenience of users who use the vehicle.

. The signal processing device inside a vehicle receives and processes sensor data from various sensor devices inside.

. Meanwhile, as the types and number of sensors installed in vehicles has increased due to ADAS or autonomous driving, the amount of data to be processed has increased.

. Meanwhile, in relation to ADAS or autonomous driving, there is a disadvantage in that updating cannot be performed while the vehicle is driving due to safety issues in response to executing applications.

### SUMMARY

. It is an objective of the present disclosure to provide a signal processing device capable of performing an update on an application while the application is running, and a vehicle display apparatus including the same.

. It is also an objective of the present disclosure to provide a signal processing device capable of performing an update of a microservice while the microservice is running, and a vehicle display apparatus including the same.

. It is also an objective of the present disclosure to provide a signal processing device capable of efficiently performing data processing using a microservice, and a vehicle display apparatus including the same.

. In accordance with an aspect of the present disclosure, the above and other objectives may be accomplished by providing a signal processing device and a vehicle display apparatus including the same, which include: a processor configured to execute a first application, wherein the processor is configured to execute each of a plurality of microservices to execute the first application, to update a second microservice corresponding to a duplication of the first microservice to update the first microservice during an operation of the first microservice among the plurality of microservices, to distribute a load to each of the first microservice and the second microservice after completion of the update of the second microservice and control the operation of the first microservice and the second microservice.

. Meanwhile, after the completion of the update of the second microservice, the processor may be configured to sequentially increase a load of the second microservice during the operation of the first microservice and the second microservice.

. Meanwhile, the processor may be configured to terminate the operation of the first microservice and to operate only the second microservice after the operation of the first microservice and the second microservice.

. Meanwhile, the processor may be configured to execute a third microservice based on result data of the first microservice, and in response to a data reception period of the first microservice being less than an expected update time of the first microservice, the processor may be configured to update the second microservice corresponding to the duplication of the first microservice.

. Meanwhile, the processor may be configured to update the first microservice, not the execution or update of the second microservice, in response to the data reception period of the first microservice being greater than or equal to an expected update time of the first microservice.

. Meanwhile, the processor may be configured to control the first microservice and the second microservice to be executed in parallel and to adjust the result data output from the first microservice or the second microservice through an executed proxy.

. Meanwhile, the processor may be configured to execute a first proxy for distributing input data to each of the first microservice and the second microservice and to execute a second proxy for adjusting result data output from the first microservice or the second microservice.

. Meanwhile, the first proxy and the second proxy may be configured to maintain indexing through a shared memory-based sink.

. Meanwhile, the processor may be configured, in response to a third microservice being executed based on the result data of the first microservice, to update the second microservice corresponding to duplication of the first microservice to update the first microservice, and to update a fourth microservice corresponding to the third microservice based on result date of the updated second microservice.

. Meanwhile, the processor, in response to executing the plurality of microservices, may be configured to configure a new second pipeline separate from a first pipeline based on the first microservice and to update the second microservice.

. Meanwhile, the processor may be configured to output single output-based result data based on the first pipeline and the second pipeline.

. Meanwhile, the processor may be configured to output multi-output based result data based on the first pipeline and the second pipeline.

. Meanwhile, the processor may be configured to sequentially perform update for each of the plurality of microservices.

. Meanwhile, the processor may be configured to provide, in response to critical data being input during a simultaneous execution of the first microservice and the second microservice, the critical data only to the second microservice.

. Meanwhile, the processor may be configured to execute a hypervisor and to execute a plurality of virtual machines on the hypervisor, and a first virtual machine among the plurality of virtual machines may be configured to execute the plurality of microservices corresponding to a first safety level and transmit result data of the plurality of microservices or result data of some of the plurality of microservices to a second virtual machine among the plurality of virtual machines corresponding to a second safety level lower than the first safety level or a virtual machine within a second signal processing device.

. Meanwhile, the second virtual machine may be configured to execute a second application corresponding to the second safety level, and the second application may be executed based on the result data of the first microservice.

. Meanwhile, the second virtual machine may be configured to not transmit result data of the microservice being executed or result data of the application to the first virtual machine.

. Meanwhile, a core of the processor may be configured to execute the first virtual machine, and another core of the processor is configured to execute the second virtual machine.

. Meanwhile, the first virtual machine may be configured to execute a plurality of microservices corresponding to the first safety level based on input sensor data or camera data and transmit result data of the first microservice among the plurality of microservices to a second virtual machine corresponding to the second safety level lower than the first safety level.

### BRIEF DESCRIPTION OF THE DRAWINGS

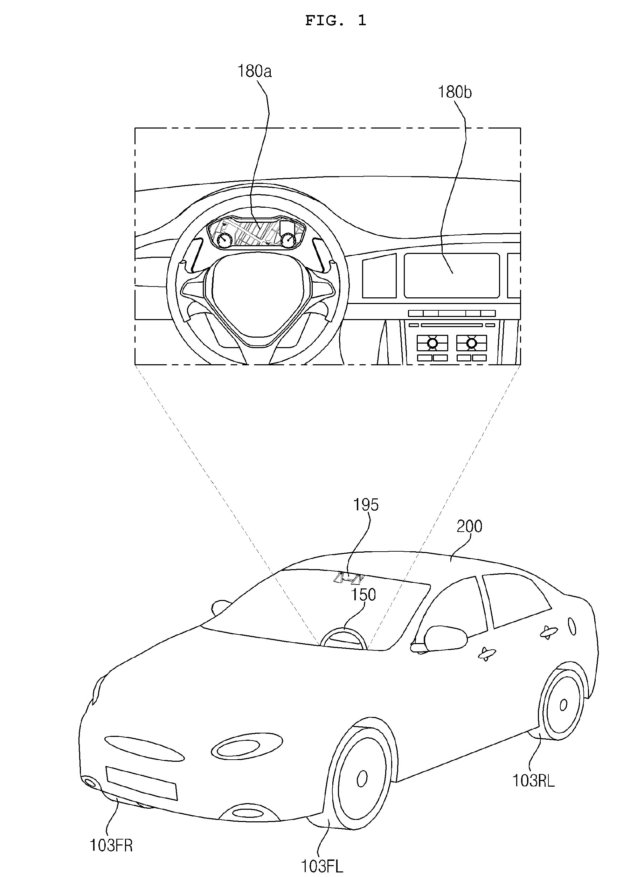

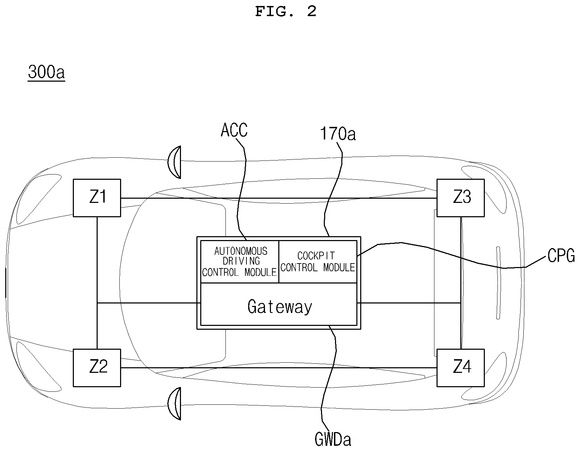

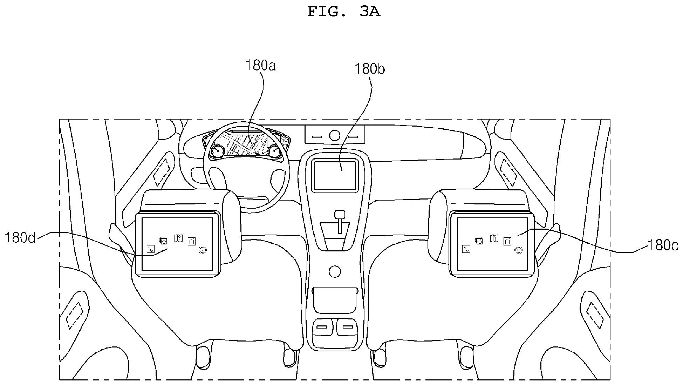

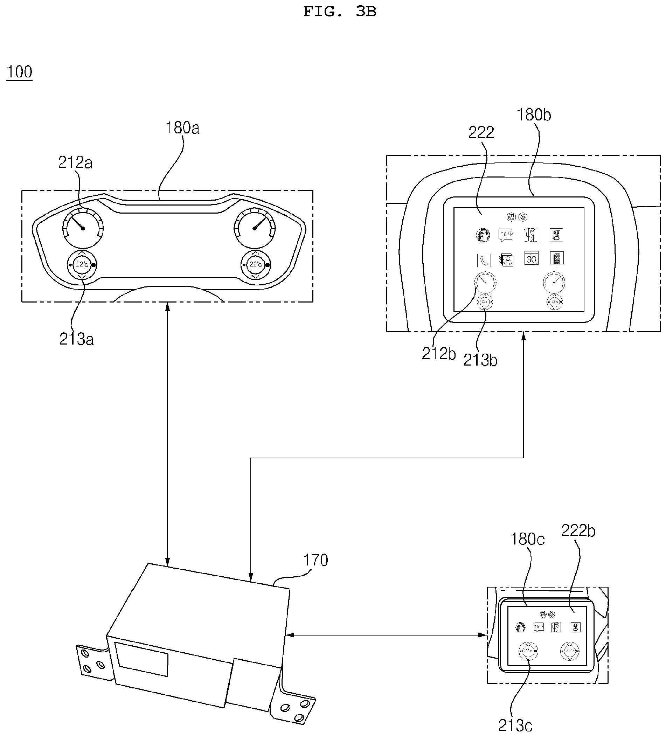

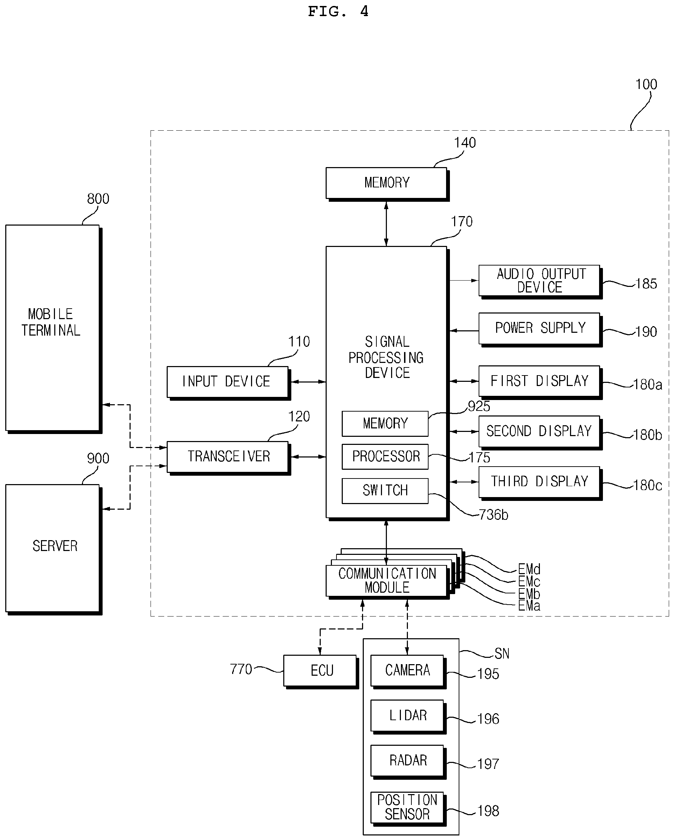

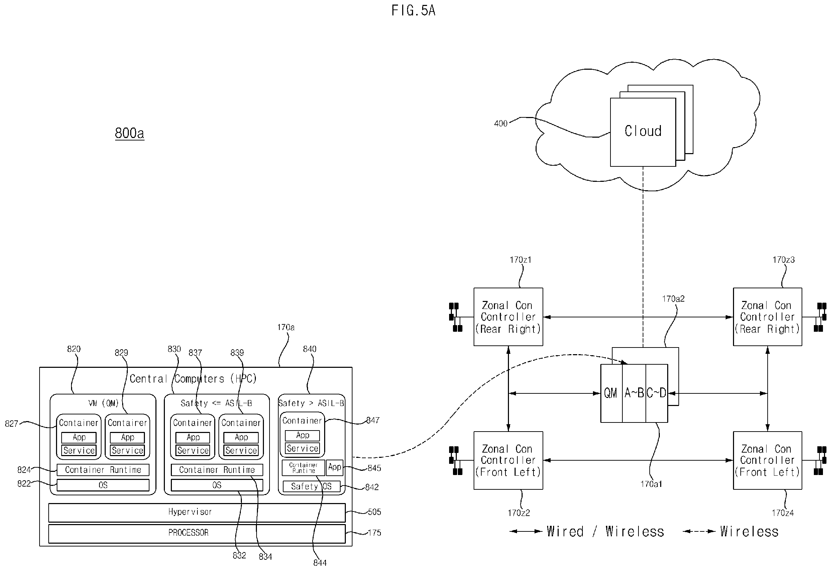

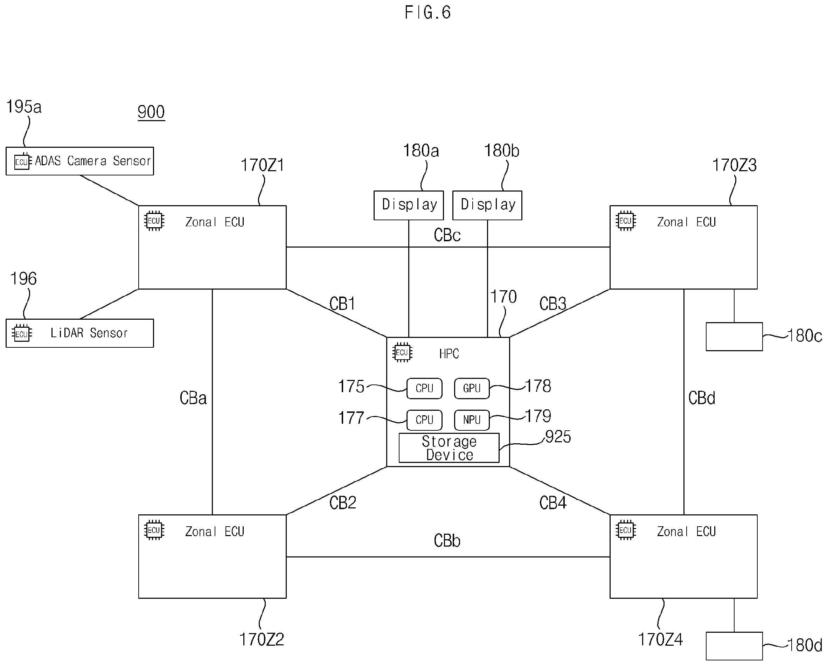

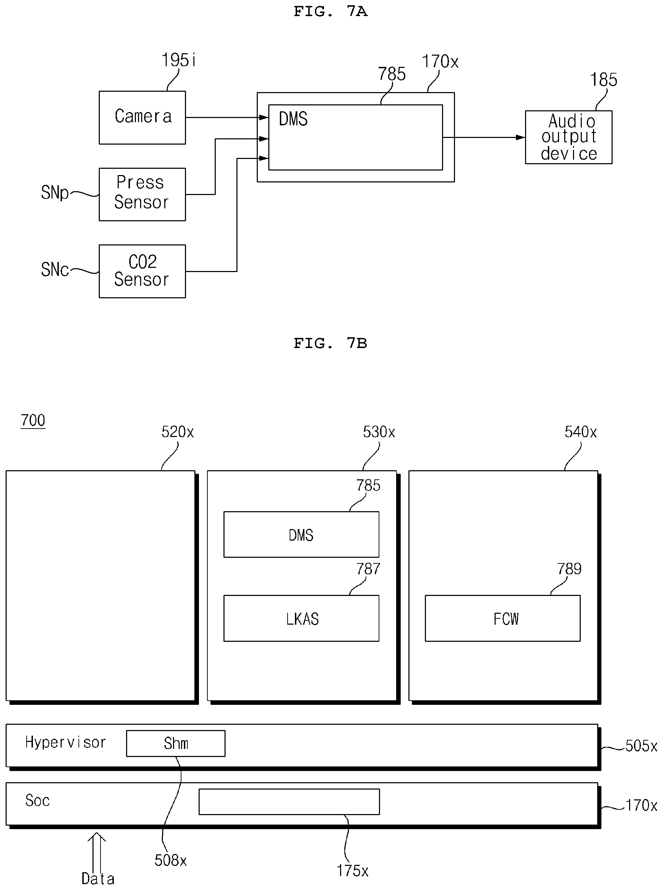

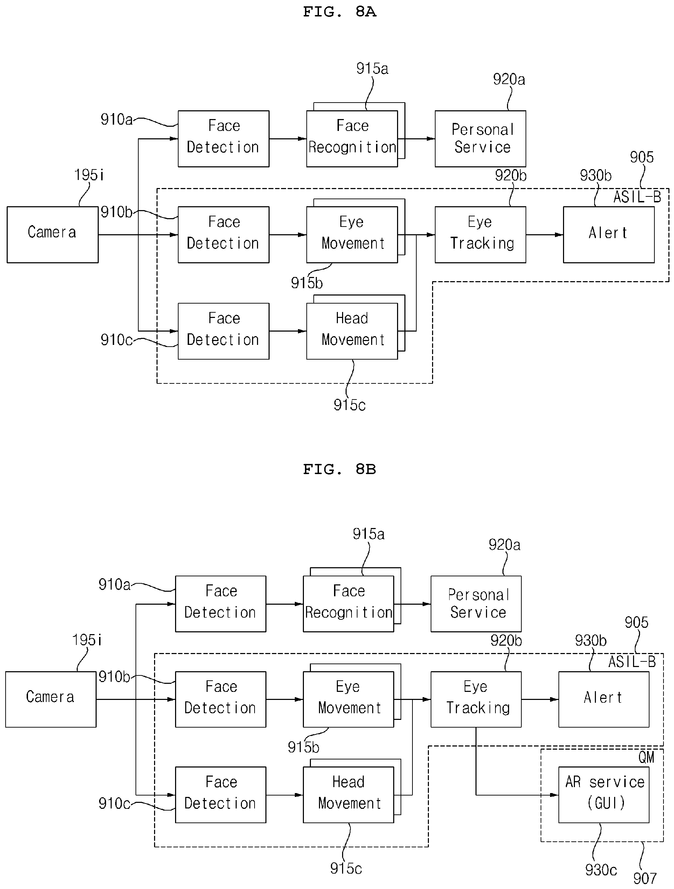

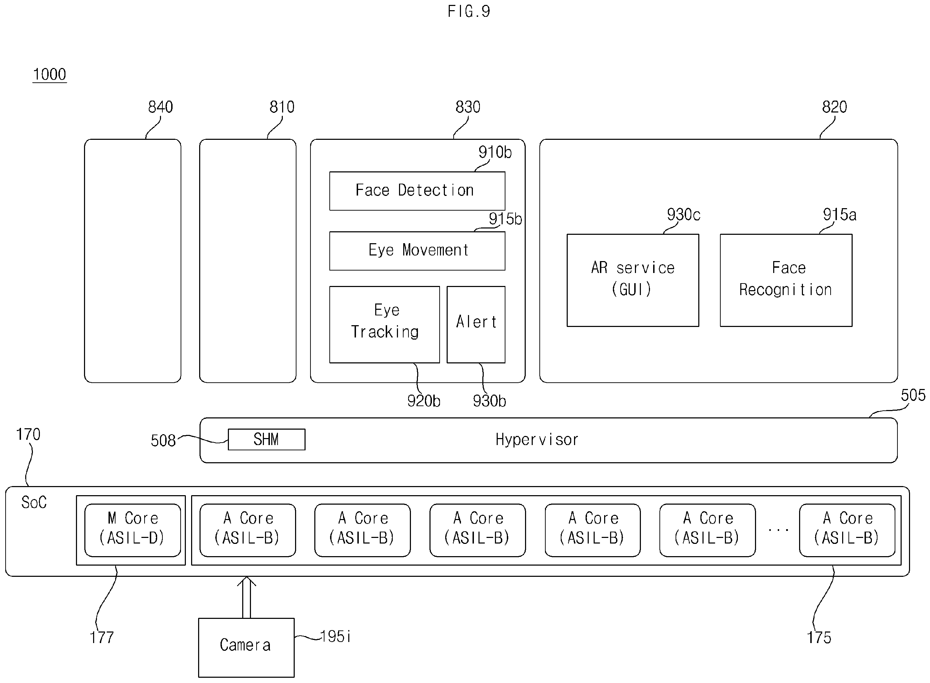

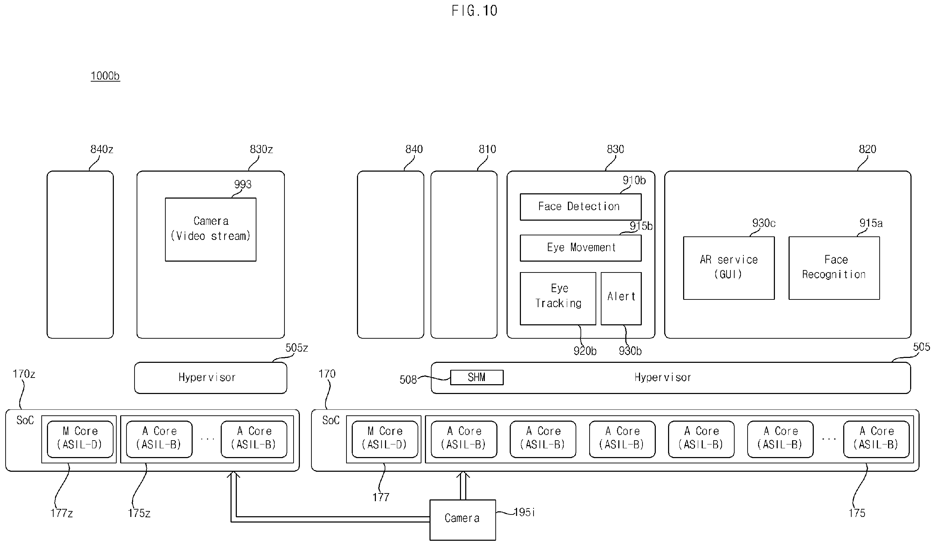

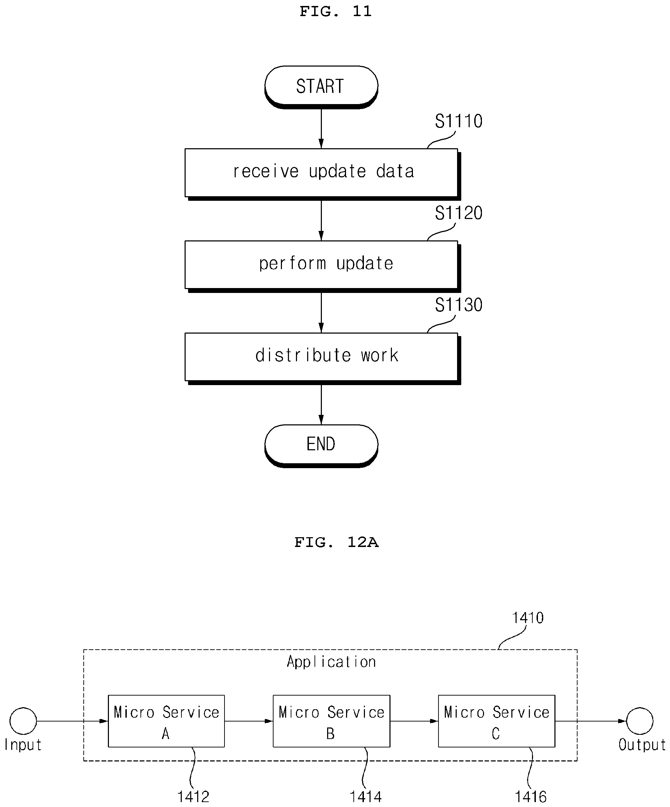

. FIG. 1 is a diagram illustrating an example of the exterior and interior of a vehicle;
. FIG. 2 is a diagram illustrating various architectures of a vehicle communication gateway;
. FIG. 3A is a diagram illustrating an example of a vehicle display apparatus in a vehicle;
. FIG. 3B is a diagram illustrating another example of a vehicle display apparatus in a vehicle;
. FIG. 4 is an internal block diagram illustrating an example of a vehicle display apparatus of FIG. 3B;
. FIGS. 5A to 5D are diagrams illustrating various examples of a vehicle display apparatus;
. FIG. 6 is a block diagram illustrating an example of a vehicle display apparatus according to an embodiment of the present disclosure;
. FIGS. 7A to 7B are diagrams referenced in the description of a signal processing device related to the present disclosure.
. FIGS. 8A to 8E are diagrams illustrating various examples of execution of a microservice according to an embodiment of the present disclosure.
. FIG. 9 is an example of an internal block diagram of a signal processing device according to an embodiment of the present disclosure.
. FIG. 10 is an example of an internal block diagram of a signal processing device according to another embodiment of the present disclosure.
. FIG. 11 is a flowchart illustrating an operating method of a signal processing device according to an embodiment of the present disclosure.
. FIGS. 12A to 19 are diagrams referenced in the description of the operation of FIG. 11.

### DETAILED DESCRIPTION

. Hereinafter, the present disclosure will be described in detail with reference to the accompanying drawings.

. With respect to constituent elements used in the following description, suffixes "module" and "unit" are given only in consideration of ease in preparation of the specification, and do not have or serve different meanings. Accordingly, the suffixes "module" and "unit" may be used interchangeably.

. FIG. 1 is a diagram illustrating an example of the exterior and interior of a vehicle.

. Referring to the figure, the vehicle 200 is moved by a plurality of wheels 103FR, 103FL, 103RL,... rotated by a power source and a steering wheel 150 configured to adjust an advancing direction of the vehicle 200.

. Meanwhile, the vehicle 200 may be provided with a camera 195 configured to acquire an image of the front of the vehicle.

. Meanwhile, the vehicle 200 may be further provided therein with a plurality of displays 180a and 180b configured to display images and information.

. In FIG. 1, a cluster display 180a and an audio video navigation (AVN) display 180b are illustrated as the plurality of displays 180a and 180b. In addition, a head up display (HUD) may also be used.

. Meanwhile, the audio video navigation (AVN) display 180b may also be called a center information display.

. Meanwhile, the vehicle 200 described in this specification may be a concept including all of a vehicle having an engine as a power source, a hybrid vehicle having an engine and an electric motor as a power source, and an electric vehicle having an electric motor as a power source.

. FIG. 2 is a diagram illustrating various architectures of a vehicle communication gateway.

. First, FIG. 2 is a diagram illustrating a first architecture of a vehicle communication gateway.

. Referring to the drawing, a first architecture 300a may correspond to a zone-based architecture.

. Accordingly, vehicle internal sensor devices and processors may be mounted in each of a plurality of zones Z1 to Z4, and a signal processing device 170a including a vehicle communication gateway GWDa may be disposed at the center of the plurality of zones Z1 to Z4.

. Meanwhile, the signal processing device 170a may further include an autonomous driving control module ACC, a cockpit control module CPG, etc., in addition to the vehicle communication gateway GWDa.

. The vehicle communication gateway GWDa in the signal processing device 170a may be a High Performance Computing (HPC) gateway.

. That is, as an integrated HPC gateway, the signal processing device 170a of FIG. 2 may exchange data with an external communication module (not shown) or processors (not shown) in the plurality of zones Z1 to Z4.

. FIG. 3A is a diagram illustrating an example of a vehicle display apparatus in a vehicle.

. Referring to the figure, a cluster display 180a, an audio video navigation (AVN) display 180b, rear seat entertainment displays 180c and 180d, and a rear-view mirror display (not shown) may be mounted in the vehicle.

. FIG. 3B is a diagram illustrating another example of a vehicle display apparatus in a vehicle.

. A vehicle display apparatus 100 according to an embodiment of the present disclosure may include a plurality of displays 180a and 180b and a signal processing device 170 configured to perform signal processing in order to display images and information on the plurality of displays 180a and 180b, and to output an image signal to at least one of the displays 180a and 180b.

. The first display 180a, which is one of the plurality of displays 180a and 180b, may be a cluster display 180a configured to display a driving state and operation information, and the second display 180b may be an audio video navigation (AVN) display 180b configured to display vehicle driving information, a navigation map, various kinds of entertainment information, or an image.

. The signal processing device 170 may have a processor 175 provided therein, and first to third virtual machines (not shown) may be executed by a hypervisor 505 in the processor 175.

. The second virtual machine (not shown) may be operated for the first display 180a, and the third virtual machine (not shown) may be operated for the second display 180b.

. Meanwhile, the first virtual machine (not shown) in the processor 175 may be configured to set a shared memory 508 based on the hypervisor 505 for transmission of the same data to the second virtual machine (not shown) and the third virtual machine (not shown). Consequently, the first display 180a and the second display 180b in the vehicle may display the same information or the same images in a synchronized state.

. Meanwhile, the first virtual machine (not shown) in the processor 175 shares at least some of data with the second virtual machine (not shown) and the third virtual machine (not shown) for divided processing of data. Consequently, the plurality of virtual machines for the plurality of displays in the vehicle may divide and process data.

. Meanwhile, the first virtual machine (not shown) in the processor 175 may receive and process wheel speed sensor data of the vehicle, and may transmit the processed wheel speed sensor data to at least one of the second virtual machine (not shown) or the third virtual machine (not shown). Consequently, at least one virtual machine may share the wheel speed sensor data of the vehicle.

. Meanwhile, the vehicle display apparatus 100 according to an embodiment of the present disclosure may further include a rear seat entertainment (RSE) display 180c configured to display driving state information, simple navigation information, various kinds of entertainment information, or an image.

. The signal processing device 170 may further execute a fourth virtual machine (not shown), in addition to the first to third virtual machines (not shown), on the hypervisor 505 in the processor 175 to control the RSE display 180c.

. Consequently, it is possible to control various displays 180a to 180c using a single signal processing device 170.

. Meanwhile, some of the plurality of displays 180a to 180c may be operated based on a Linux Operating System (OS), and others may be operated based on a Web Operating System (OS).

. The signal processing device 170 according to an embodiment of the present disclosure may be configured to display the same information or the same images in a synchronized state on the displays 180a to 180c to be operated under various operating systems.

. Meanwhile, FIG. 3B illustrates an example in which a vehicle speed indicator 212a and a vehicle internal temperature indicator 213a are displayed on a first display 180a, a home screen 222 including a plurality of applications, a vehicle speed indicator 212b, and a vehicle internal temperature indicator 213b is displayed on a second display 180b, and a second home screen 222b including a plurality of applications and a vehicle internal temperature indicator 213c is displayed on a third display 180c.

. FIG. 4 is an internal block diagram illustrating an example of the vehicle display apparatus of FIG. 3B.

. Referring to FIG. 4, a vehicle display apparatus 100 according to an embodiment of the present disclosure may include an input device 110, a transceiver 120 for communication with an external device, a plurality of communication modules EMa to EMd for internal communication, a memory 140, the signal processing device 170, a plurality of displays 180a to 180c, an audio output device 185, and a power supply 190.

. The plurality of communication modules EMa to EMd may be disposed in a plurality of zones Z1 to Z4, respectively, in FIG. 2.

. Meanwhile, the signal processing device 170 may be provided therein with a communication switch 736b for data communication with the respective communication modules EM1 to EM4.

. The respective communication modules EM1 to EM4 may perform data communication with the plurality of sensor devices SN or the ECU 770.

. Meanwhile, a plurality of sensor devices SN may include a camera 195, a lidar sensor 196, a radar sensor 197, or a position sensor 198.

. The input device 110 may include a physical button or pad for button input or touch input.

. Meanwhile, the input device 110 may include a microphone (not shown) for user voice input.

. The transceiver 120 may wirelessly exchange data with a mobile terminal 800 or a server 900.

. In particular, the transceiver 120 may wirelessly exchange data with a mobile terminal of a vehicle driver. Any of various data communication schemes,, such as Bluetooth, Wi-Fi, WIFI Direct, and APIX, may be used as a wireless data communication scheme.

. The transceiver 120 may receive weather information and road traffic state information,, such as Transport Protocol Experts Group (TPEG) information, from a mobile terminal 800 or a server 900. To this end, the transceiver 120 may include a mobile communication module (not shown).

. The plurality of communication modules EM1 to EM4 may receive sensor data and the like from the electronic control unit (ECU) 770 or the sensor device SN or a zonal signal processing device 170Z, and may transmit the received sensor data to the signal processing device 170.

. Here, the sensor data may include at least one of vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, and vehicle internal humidity data.

. The sensor data may be acquired from a heading sensor, a yaw sensor, a gyro sensor, a position sensor, a vehicle forward/backward movement sensor, a wheel sensor, a vehicle speed sensor, a car body inclination sensor, a battery sensor, a fuel sensor, a tire sensor, a steering-wheel-rotation-based steering sensor, a vehicle internal temperature sensor, or a vehicle internal humidity sensor.

. Meanwhile, the position module may include a GPS module configured to receive GPS information or a position sensor 198.

. Meanwhile, at least one of the plurality of communication modules EM1 to EM4 may transmit position information data sensed by the GPS module or the position sensor 198 to the signal processing device 170.

. Meanwhile, at least one of the plurality of communication modules EM1 to EM4 may receive front image data of the vehicle, side-of-vehicle image data, rear image data of the vehicle, and obstacle-around-vehicle distance information from the camera 195, the lidar sensor 196, or the radar sensor 197, etc., and may transmit the received information to the signal processing device 170.

. The memory 140 may store various data necessary for overall operation of the vehicle display apparatus 100,, such as programs for processing or control of the signal processing device 170.

. For example, the memory 140 may store data about the hypervisor and first to third virtual machines executed by the hypervisor in the processor 175.

. The audio output device 185 may convert an electrical signal from the signal processing device 170 into an audio signal, and may output the audio signal. To this end, the audio output device 185 may include a speaker.

. The power supply 190 may supply power necessary to operate components under control of the signal processing device 170. In particular, the power supply 190 may receive power from a battery in the vehicle.

. The signal processing device 170 may control the overall operation of each device in the vehicle display apparatus 100.

. For example, the signal processing device 170 may include a processor 175 configured to perform signal processing for the vehicle displays 180a and 180b.

. The processor 175 may be configured to execute the first to third virtual machines (not shown) on the hypervisor 505 (see FIG. 10) in the processor 175.

. Among the first to third virtual machines (not shown) (see FIG. 10), the first virtual machine (not shown) may be called a server virtual machine, and the second and third virtual machines (not shown) and (not shown) may be called guest virtual machines.

. For example, the first virtual machine (not shown) in the processor 175 may receive sensor data from the plurality of sensor devices" such as vehicle sensor data, position information data, camera image data, audio data, or touch input data, and may process and output the received sensor data.

. As described above, the first virtual machine (not shown) may process most of the data, whereby 1:N data sharing may be achieved.

. In another example, the first virtual machine (not shown) may directly receive and process may data, Ethernet data, audio data, radio data, USB data, and wireless communication data for the second and third virtual machines (not shown).

. Further, the first virtual machine (not shown) may transmit the processed data to the second and third virtual machines (not shown).

. Accordingly, only the first virtual machine (not shown), among the first to third virtual machines (not shown), may receive sensor data from the plurality of sensor devices, communication data, or external input data, and may perform signal processing, whereby load in signal processing by the other virtual machines may be reduced and 1:N data communication may be achieved, and therefore synchronization at the time of data sharing may be achieved.

. Meanwhile, the first virtual machine (not shown) may be configured to write data in the shared memory 508, whereby the second virtual machine (not shown) and the third virtual machine (not shown) share the same data.

. For example, the first virtual machine (not shown) may be configured to write vehicle sensor data, the position information data, the camera image data, or the touch input data in the shared memory 508, whereby the second virtual machine (not shown) and the third virtual machine (not shown) share the same data. Consequently, 1:N data sharing may be achieved.

. Eventually, the first virtual machine (not shown) may process most of the data, whereby 1:N data sharing may be achieved.

. Meanwhile, the first virtual machine (not shown) in the processor 175 may be configured to set the shared memory 508 based on the hypervisor 505 in order to transmit the same data to the second virtual machine (not shown) and the third virtual machine (not shown).

. Meanwhile, the signal processing device 170 may process various signals, , such as an audio signal, an image signal, and a data signal. To this end, the signal processing device 170 may be implemented in the form of a system on chip (SOC) .

. Meanwhile, the signal processing device 170 in the display apparatus 100 of FIG. 4 may be the same as signal processing devices 170, 170a1, and 170a2 of a vehicle display apparatus of FIG. 5A and subsequent figures.

. FIGS. 5A to 5D are diagrams illustrating various examples of a vehicle display apparatus.

. FIG. 5A is a diagram illustrating an example of a vehicle display apparatus according to an embodiment of the present disclosure.

. Referring to FIG. 5A, a vehicle display apparatus 800a according to an embodiment of the present disclosure includes signal processing devices 170a1 and 170a2 and a plurality of zonal signal processing devices 170Z1 to 170Z4.

. Meanwhile, two signal processing devices 170a1 and 170a2 are illustrated in the figure, which are provided for backup and the like, and one signal processing device is also possible.

. Meanwhile, the signal processing devices 170a1 and 170a2 may be referred to as a High Performance Computing (HPC) signal processing devices.

. The plurality of zonal signal processing devices 170Z1 to 170Z4 may be located in the respective zones Z1 to Z4 and may transmit sensor data to the signal processing devices 170a1 and 170a2.

. The signal processing devices 170a1 and 170a2 may receive data by wire from the plurality of zonal signal processing devices 170Z1 to 170Z4 or a communication device 120.

. In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 may exchange data with the server 400 based on wireless communication, and the signal processing devices 170a1 and 170a2 may exchange data with the communication device 120 based on wired communication.

. Meanwhile, the data received by the signal processing devices 170a1 and 170a2 may include camera data or sensor data.

. For example, the vehicle internal sensor data may include at least one of vehicle wheel speed data, vehicle direction data, vehicle location data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data, vehicle internal humidity data, external vehicle radar data or external vehicle lidar data.

. Meanwhile, the camera data may include external vehicle camera data and vehicle internal camera data.

. Meanwhile, the signal processing devices 170a1 and 170a2 may be configured to execute a plurality of virtual machines 820, 830, and 840 based on safety levels.

. In the drawing, an example is illustrated in which the processor 175 in the signal processing device 170a is configured to execute the hypervisor 505, and is configured to execute first to third virtual machines 820 to 840 on the hypervisor 505 according to the Automotive Safety Integrity Level (ASIL).

. The first virtual machine 820 may be a virtual machine corresponding to quality management (QM) which is the lowest risk level of the ASIL with no mandatory need.

. The first virtual machine 820 may be configured to execute an operating system 822, a container runtime 824 on the operating system 822, and containers 827 and 829 on the container runtime 824.

. The second virtual machine 820 may be a virtual machine corresponding to ASIL A or ASIL B with the combination of severity, exposure, and controllability values being 7 or 8.

. The second virtual machine 820 may be configured to execute an operating system 832, a container runtime 834 on the operating system 832, and containers 837 and 839 on the container runtime 834.

. The third virtual machine 840 may be a virtual machine corresponding to ASIL C or ASIL D with the combination of severity, exposure, and controllability values being 9 or 10.

. Meanwhile, ASIL D may correspond to a grade that requires the highest level of safety.

. The third virtual machine 840 may be configured to execute a safety operating system 842 and an application 845 on the operating system 842.

. Meanwhile, the third virtual machine 840 may also execute the safety operating system 842, a container runtime 844 on the safety operating system 842, and a container 847 on the container runtime 844.

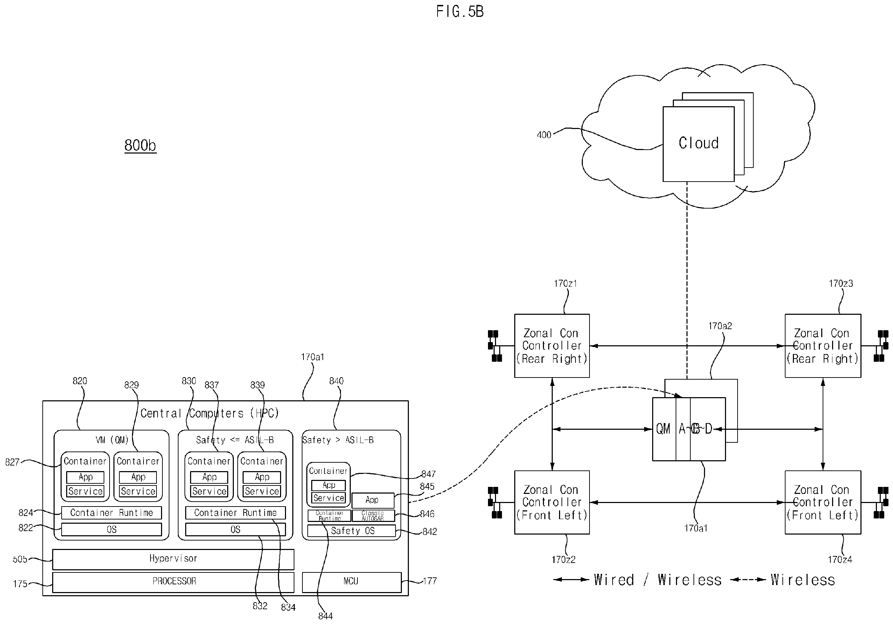

. Meanwhile, unlike the drawing, the third virtual machine 840 may also be executed by a separate core, rather than by the processor 175, which will be described below with reference to FIG. 5B.

. FIG. 5B is a diagram illustrating another example of a vehicle display apparatus according to an embodiment of the present disclosure.

. Referring to FIG. 5B, a vehicle display apparatus 800b according to an embodiment of the present disclosure includes signal processing devices 170a1 and 170a2 and a plurality of zonal signal processing devices 170Z1 to 170Z4.

. The vehicle display apparatus 800b of FIG. 5B is similar to the vehicle display apparatus 800a of FIG. 5A, with a difference being that the signal processing device 170a1 of FIG. 5B is partially different from the signal processing device 170a1 of FIG. 5A.

. The following description will focus on the difference, in which the signal processing device 170a may include a processor 175 and a second processor 177.

. The processor 175 in the signal processing device 170a1 is configured to execute the hypervisor 505, and is configured to execute the first and second virtual machines 820 and 830 on the hypervisor 505 according to the ASIL.

. The first virtual machine 820 may be configured to execute the operating system 822, the container runtime 824 on the operating system 822, and the containers 827 and 829 on the container runtime 824.

. The second virtual machine 820 may be configured to execute the operating system 832, the container runtime 834 on the operating system 832, and the containers 837 and 839 on the container runtime 834.

. Meanwhile, the second processor 177 in the signal processing device 170a1 may be configured to execute the third virtual machine 840.

. The third virtual machine 840 may be configured to execute the safety operating system 842, an AUTOSAR 845 on the operating system 842, and an application 845 on the AUTOSAR 845. That is, unlike FIG. 5A, the third virtual machine 840 may further execute the AUTOSAR 846 on the operating system 842.

. Meanwhile, similarly to FIG. 5A, the third virtual machine 840 may also execute the safety operating system 842, the container runtime 844 on the safety operating system 842, and the container 847 on the container runtime 844.

. Meanwhile, unlike the first and second virtual machines 820 and 830, the third virtual machine 840 that requires a high safety level is desirably executed by the second processor 177 that is a different core or a different processor.

. Meanwhile, in the signal processing devices 170a1 and 170a2 of FIGS. 5A and 5B, if there is abnormality in the first signal processing device 170a, the second signal processing device 170a may operate which is provided for backup purposes.

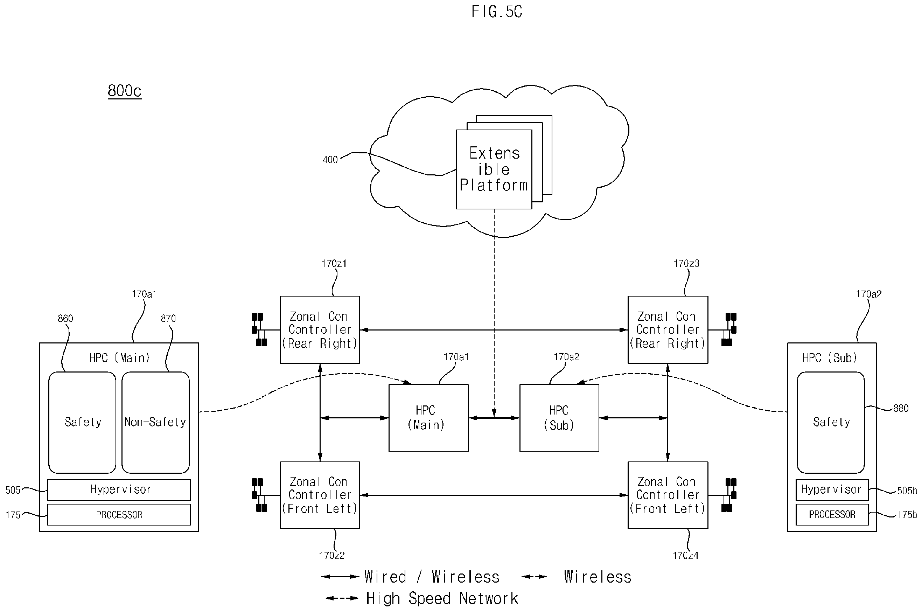

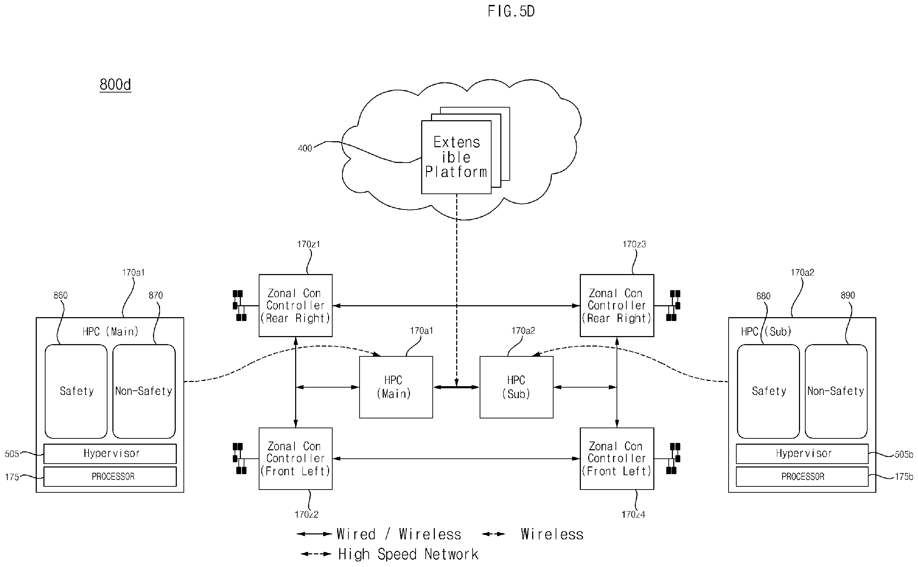

. Unlike the example, the signal processing devices 170a1 and 170a2 may operate at the same time, among which the first signal processing device 170a may operate as a main device, and the second signal processing device 170a2 may operate as a sub device, which will be described below with reference to FIGS. 5C and 5D.

. FIG. 5C is a diagram illustrating yet another example of a vehicle display apparatus according to an embodiment of the present disclosure.

. Referring to FIG. 5C, a vehicle display apparatus 800c according to an embodiment of the present disclosure includes signal processing devices 170a1 and 170a2 and a plurality of zonal signal processing devices 170Z1 to 170Z4.

. Meanwhile, two signal processing devices 170a1 and 170a2 are illustrated in the figure, which are provided for backup and the like, and one signal processing device is also possible.

. Meanwhile, the signal processing devices 170a1 and 170a2 may be referred to as a High Performance Computing (HPC) signal processing devices.

. The plurality of zonal signal processing devices 170Z1 to 170Z4 may be located in the respective zones Z1 to Z4 and may transmit sensor data to the signal processing devices 170a1 and 170a2.

. The signal processing devices 170a1 and 170a2 may receive data by wire from the plurality of zonal signal processing devices 170Z1 to 170Z4 or a communication device 120.

. In the drawing, an example is illustrated in which the signal processing devices 170a1 and 170a2 exchange data with the plurality of zonal signal processing devices 170Z1 to 170Z4 based on wired communication, and the signal processing devices 170a1 and 170a2 exchange data with the server 400 based on wireless communication, but the communication device 120 may exchange data with the server 400 based on wireless communication, and the signal processing devices 170a1 and 170a2 exchange data with the communication device 120 based on wired communication.

. Meanwhile, the data received by the signal processing devices 170a1 and 170a2 may include camera data or sensor data.

. Meanwhile, the processor 175 in the first signal processing device 170a1 of the signal processing devices 170a1 and 170a2 may be configured to execute the hypervisor 505, and may be configured to execute each of a safety virtual machine 860 and a non safety virtual machine 870 on the hypervisor 505.

. Meanwhile, the processor 175b in the second signal processing device 170a2 of the signal processing devices 170a1 and 170a2 may be configured to execute the hypervisor 505b, and may be configured to execute only a safety virtual machine 880 on the hypervisor 505.

. In the method, safety and non safety virtual machines may be processed separately by the first signal processing device 170a1 and the second signal processing device 170a2, thereby improving stability and processing speed.

. Meanwhile, high-speed network communication may be performed between the first signal processing device 170a1 and the second signal processing device 170a2.

. FIG. 5D is a diagram illustrating yet another example of a vehicle display apparatus according to an embodiment of the present disclosure.

. Referring to FIG. 5D, a vehicle display apparatus 800d according to an embodiment of the present disclosure includes signal processing devices 170a1 and 170a2 and a plurality of zonal signal processing devices 170Z1 to 170Z4.

. The vehicle display apparatus 800d of FIG. 5D is similar to the vehicle display apparatus 800c of FIG. 5C, with a difference being that the second signal processing device 170a2 of FIG. 5D is partially different from the second signal processing device 170a2 of FIG. 5C.

. The processor 175b in the second signal processing device 170a2 of FIG. 5D may be configured to execute the hypervisor 505b, and may be configured to execute each of a safety virtual machine 880 and a non safety virtual machine 890 on the hypervisor 505.

. That is, unlike FIG. 5C, there is a difference in that the processor 175b in the second signal processing device 170a2 further is configured to execute the non safety virtual machine 890.

. In the method, safety and non safety virtual machines may be processed separately by the first signal processing device 170a1 and the second signal processing device 170a2, thereby improving stability and processing speed.

. FIG. 6 is an exemplary block diagram of a vehicle display apparatus according to an embodiment of the present disclosure.

. Referring to FIG. 6, a vehicle display apparatus 900 according to an embodiment of the present disclosure includes the signal processing device 170 and at least one display.

. In the diagram, a cluster display 180a and an audio video navigation (AVN) display 180b are illustrated as the at least one display.

. Meanwhile, the vehicle display apparatus 900 may further include the plurality of zonal signal processing devices 170Z1 to 170Z4.

. In this case, the signal processing device 170 is a high-performance centralized signal processing and control device including a plurality of CPUs 175, GPUs 178, NPUs 179, etc., and may be referred to as a High Performance Computing (HPC) signal processing device or a central signal processing device.

. The plurality of zonal signal processing devices 170Z1 to 170Z4 and the signal processing device 170 may be connected via wired cables CB1 to CB4.

. Meanwhile, the plurality of zonal signal processing devices 170Z1 to 170Z4 may be connected via wired cables CBa to CBd.

. In this case, the wired cables CBa to CBd may include may communication cable or Ethernet communication cable, or PCI Express cable.

. Meanwhile, the signal processing device 170 according to an embodiment of the present disclosure may include at least one processor 175, 178, and 177, and a storage device 925 having a large capacity.

. For example, the signal processing device 170 according to an embodiment of the present disclosure may include central processors 175 and 177, a graphic processor 178, and a neural processor 179.

. Meanwhile, sensor data may be transmitted from at least one of the plurality of zonal signal processing devices 170Z1 to 170Z4 to the signal processing device 170. Particularly, the sensor data may be stored in the storage device 925 in the signal processing device 170.

. In this case, the sensor data may include at least one of camera data, lidar data, radar data, vehicle direction data, vehicle position data (global positioning system (GPS) data), vehicle angle data, vehicle speed data, vehicle acceleration data, vehicle inclination data, vehicle forward/backward movement data, battery data, fuel data, tire data, vehicle lamp data, vehicle internal temperature data or vehicle internal humidity data.

. In the drawing, an example is illustrated in which the camera data from the camera 195a and the lidar data from the lidar sensor 196 are input to a first zonal signal processing device 170Z1, and the camera data and the lidar data are transmitted to the signal processing device 170 via a second zonal signal processing device 170Z2 and a third zonal signal processing device 170Z3, and the like.

. Meanwhile, data write speed or data read speed to write and read data to and from the storage device 925 is faster than a network speed when the sensor data is transmitted from at least one of the plurality of zonal signal processing devices 170Z1 to 170Z4 to the signal processing device 170, such that it is preferred to perform multi path routing so as to avoid bottlenecks in a network.

. To this end, the signal processing device 170 according to an embodiment of the present disclosure may perform multi path routing based on Software Defined Network (SDN). Accordingly, stable network environment for data write and read operations may be ensured. Further, data may be transmitted to the storage device 925 by using a plurality of paths, such that data may be transmitted by dynamically changing a network configuration.

. It is desirable that data communication between the plurality of zonal signal processing devices 170Z1 to 170Z4 and the signal processing device 170 in the vehicle display apparatus 900 according to an embodiment of the present disclosure is peripheral component interconnect express communication in order to provide high band and low delay communication.

. FIGS. 7A and 7B are diagrams referenced in the description of a signal processing device related to the present disclosure.

. FIG. 7A illustrates an example in which an application based on camera data, etc. is executed in a signal processing device.

. Referring to the drawings, a signal processing device 170x related to the present disclosure is configured to execute a driver monitoring systems (DMS) application 785 based on camera data from an vehicle internal camera 195i, sensor data from a pressure sensor SNp, and sensor data from a gas sensor SNc, and may control a warning sound to be output to an audio output device 185 based on the result data.

. FIG. 7B is a diagram referenced in the description of the operation of FIG. 7A.

. Referring to the drawings, the signal processing device 170x related to the present disclosure may include a processor 175x, and the processor 175x may be configured to execute a hypervisor 505.

. Meanwhile, the processor 175x related to the present disclosure is configured to execute a plurality of virtual machines 520x, 530x, and 540x on the hypervisor 505, and a second virtual machine 530x, among the plurality of virtual machines 520x, 530x, and 540x, may be configured to execute a DMS application 785 based on the camera data from the vehicle internal camera 195i, the sensor data from the pressure sensor SNp, and the sensor data from the gas sensor SNc and execute a lane keep assist system (LKAS) application 787 based on vehicle external camera data.

. Meanwhile, a third virtual machine 540x, among the plurality of virtual machines 520x, 530x, and 540x, may be configured to execute a forward collision warning (FCW) application 789 based on the vehicle external camera data.

. Meanwhile, as shown in FIGS. 7A and 7B, in response to executing the driver monitoring system (DMS) application 785 and the LKAS application 787 within the second virtual machine 530x, there is a problem that a workload of the second virtual machine 530x is significant.

. In particular, in order to execute the driver monitoring system (DMS) application 785, the camera data from the vehicle internal camera 195i, the sensor data from the pressure sensor SNp, and the sensor data from the gas sensor SNc has to be received and processed, so there is a problem that the workload of the second virtual machine 530x is significant.

. Meanwhile, in response to executing the forward collision warning (FCW) application 789, the third virtual machine 540x is executed in a separate virtual machine from the lane keeping assist system 787, which is commonly based on the vehicle external camera data, so there is a problem that the workload is performed inefficiently.

. In this disclosure, a method for sharing intermediate result data of an application, etc., in response to executing a similar application is proposed.

. To this end, the signal processing device 170 according to an embodiment of the present disclosure divides an application into a plurality of microservices and is configured to execute another microservice based on the results of a microservice, etc., to efficiently distribute the workload.

. For example, the signal processing device 170 according to an embodiment of the present disclosure may control a first microservice among the plurality of microservices to be executed in a first virtual machine and a second microservice to be executed in a second virtual machine, and the second microservice to be executed based on result data of the first virtual machine by sharing the result of the first microservice using the shared memory 508, etc. Accordingly, data processing may be performed efficiently.

. Meanwhile, the signal processing device 170 according to an embodiment of the present disclosure may be configured to execute a plurality of virtual machines by distinguishing them according to a safety level.

. Meanwhile, the signal processing device 170 according to an embodiment of the present disclosure may be configured to execute applications or microservices by dividing them according to the safety level.

. Accordingly, in relation to vehicle driver assistance (ADAS) or autonomous driving, data processing may be stably performed according to the automotive safety integrity level (ASIL).

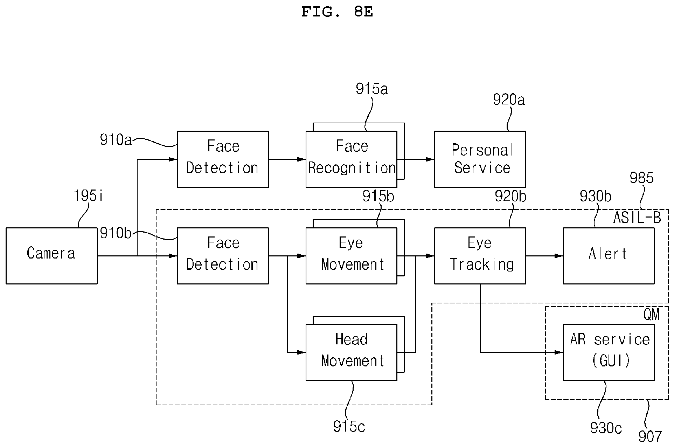

. FIGS. 8A and 8E are diagrams illustrating various examples of execution of microservices according to an embodiment of the present disclosure.

. FIG. 8A illustrates execution of a plurality of microservices corresponding to ASIL B based on camera data from the internal camera 195i.

. Referring to the drawing, the signal processing device 170 according to an embodiment of the present disclosure may be configured to execute the driver monitoring system (DMS) application 905 corresponding to ASIL B.

. For example, the signal processing device 170 according to an embodiment of the present disclosure may be configured to execute the driver monitoring system (DMS) application 905 separately for a plurality of microservices.

. In the drawing, a plurality of microservices for the driver monitoring system (DMS) application 905 includes, for example, a face detection microservice 910b, an eye movement microservice 915b, an eye tracking microservice 920b, and an alert microservice 930b.

. That is, the signal processing device 170 according to an embodiment of the present disclosure may be configured to execute a plurality of microservices, i.e., the face detection microservice 910b, the eye movement microservice 915b, the eye tracking microservice 920b, and the alert microservice 930b, for the driver monitoring system (DMS) application 905 corresponding to ASIL B.

. Meanwhile, the face detection microservice 910b is executed based on the camera data from the internal camera 195i, and the result data of the face detection microservice 910b is transmitted to the eye movement microservice 915b.

. Meanwhile, the eye movement microservice 915b is executed based on the result data of the face detection microservice 910b, and the result data of the eye movement microservice 915b is transmitted to the eye tracking microservice 920b.

. Meanwhile, the eye tracking microservice 920b is executed based on the result data of the eye movement microservice 915b, and the result data of the eye tracking microservice 920b is transmitted to the alert microservice 930b.

. Meanwhile, the alert microservice 930b may be executed based on the result data of the eye tracking microservice 920b, and the result data may be input to the audio output device 185, so that a warning sound may be output from the audio output device 185.

. Meanwhile, the signal processing device 170 according to an embodiment of the present disclosure may further execute a second face detection microservice 910c and a head movement microservice 915c for the driver monitoring system (DMS) application 905 corresponding to ASIL B.

. The second face detection microservice 910c is executed based on the camera data from the internal camera 195i, and the result data of the second face detection microservice 910c is transmitted to the head movement microservice 915c.

. Meanwhile, the head movement microservice 915c is executed based on the result data of the second face detection microservice 910c, and the result data of the head movement microservice 915c is transmitted to the eye tracking microservice 920b.

. Meanwhile, the eye tracking microservice 920b is executed based on the result data of the head movement microservice 915c and the result data of the eye movement microservice 915b, and the result data of the eye tracking microservice 920b may be transmitted to the alert microservice 930b.

. Meanwhile, the signal processing device 170 according to an embodiment of the present disclosure may further execute a plurality of microservices that are not related to ASIL B, for example, corresponding to quality management (QM).

. In the drawing, a third face detection microservice 910a, a face recognition microservice 915a, and a personal microservice 920a may be executed as a plurality of microservices that are not related to ASIL B, respectively.

. FIG. 8B illustrates an example of executing a plurality of microservices corresponding to ASIL B and a microservice corresponding to QM based on the camera data from the internal camera 195i.

. Referring to the drawing, the signal processing device 170 according to an embodiment of the present disclosure may be configured to execute the driver monitoring system (DMS) application 905 corresponding to ASIL B, similarly to FIG. 8A.

. For example, the signal processing device 170 according to an embodiment of the present disclosure may be configured to execute each of the face detection microservice 910b, the eye movement microservice 915b, the eye tracking microservice 920b, and the alert microservice 930b as a plurality of microservices for the driver monitoring system (DMS) application 905 corresponding to ASIL B.

. Meanwhile, the signal processing device 170 according to an embodiment of the present disclosure may further execute each of the second face detection microservice 910c and the head movement microservice 915c for the driver monitoring system (DMS) application 905 corresponding to ASIL B.

. Meanwhile, the signal processing device 170 according to an embodiment of the present disclosure may be configured to execute the third face detection microservice 910a, the face recognition microservice 915a, and the personal microservice 920a as a plurality of microservices, which are not related to ASIL B.

. Meanwhile, the signal processing device 170 according to an embodiment of the present disclosure may be configured to execute an augmented reality microservice 930c, which is an example of a graphics provision microservice, as a microservice corresponding to QM.

. At this time, the signal processing device 170 according to an embodiment of the present disclosure may transmit the result data of the eye tracking microservice 920b among the microservices in the application 985 corresponding to ASIL B to the augmented reality microservice 930c corresponding to QM, which has a lower safety level.

. Accordingly, the augmented reality microservice 930c corresponding to QM may be executed based on the result data of the eye tracking microservice 920b, and the result data of the augmented reality microservice 930c may be transmitted to the display 180 and displayed.

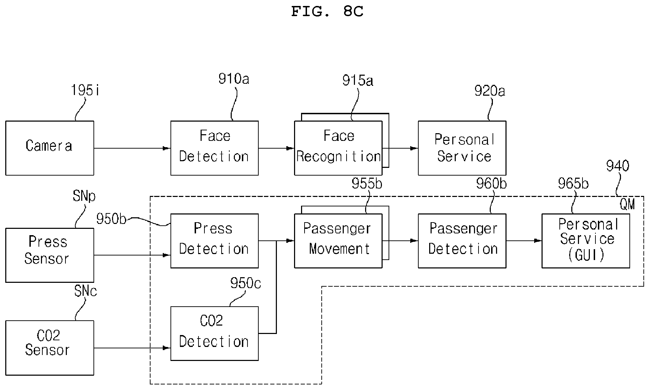

. FIG. 8C illustrates execution of a plurality of microservices corresponding to QM.

. Referring to the drawing, the signal processing device 170 according to an embodiment of the present disclosure may be configured to execute a passenger monitoring application 940 corresponding to QM.

. For example, the signal processing device 170 according to an embodiment of the present disclosure may be configured to execute the passenger monitoring application 940 separately for a plurality of microservices.

. In the drawing, as the plurality of microservices for the passenger monitoring application 940, a passenger seating (press detection) microservice 950b, a passenger movement microservice 955b, a passenger detection microservice 960b, and a graphics provision microservice 965b.

. That is, the signal processing device 170 according to an embodiment of the present disclosure may be configured to execute, as a plurality of microservices, the passenger seating microservice 950b, the passenger movement microservice 955b, the passenger detection microservice 960b, and the graphics provision microservice 965b, for the passenger monitoring application 940 corresponding to QM.

. Meanwhile, the passenger seating microservice 950b is executed based on the sensor data from the pressure sensor SNp, and the result data of the passenger seating microservice 950b is transmitted to the passenger movement microservice 955b.

. Meanwhile, the passenger movement microservice 955b is executed based on the result data of the passenger seating microservice 950b, and the result data of the passenger movement microservice 955b is transmitted to the passenger detection microservice 960b.

. Meanwhile, the passenger detection microservice 960b is executed based on the result data of the passenger movement microservice 955b, and the result data of the passenger detection microservice 960b is transmitted to the graphics provision microservice 965b.

. Meanwhile, the graphics provision microservice 965b is executed based on the result data of the passenger detection microservice 960b, and the result data of the graphics provision microservice 965b may be transmitted to the display 180 and displayed.

. Meanwhile, the signal processing device 170 according to an embodiment of the present disclosure may further execute the gas detection (CO₂ detection) microservice 950c for the passenger monitoring application 940 corresponding to QM.

. The gas detection (CO₂ detection) microservice 950c is executed based on the sensor data from the gas sensor SNc, and the result data of the gas detection (CO₂ detection) microservice 950c is transmitted to the passenger movement microservice 955b.

. Meanwhile, the passenger movement microservice 955b is executed based on the result data of the gas detection (CO₂ detection) microservice 950c, and the result data of the passenger movement microservice 955b is transmitted to the passenger detection microservice 960b.

. Meanwhile, the signal processing device 170 according to an embodiment of the present disclosure may further execute a plurality of microservices unrelated to the passenger monitoring application 940.

. In the drawing, the signal processing device 170 is illustrated as executing the face detection microservice 910a, the face recognition microservice 915a, and the personal microservice 920a based on the camera data from the vehicle internal camera 195i, as a plurality of microservices unrelated to the passenger monitoring application 940.

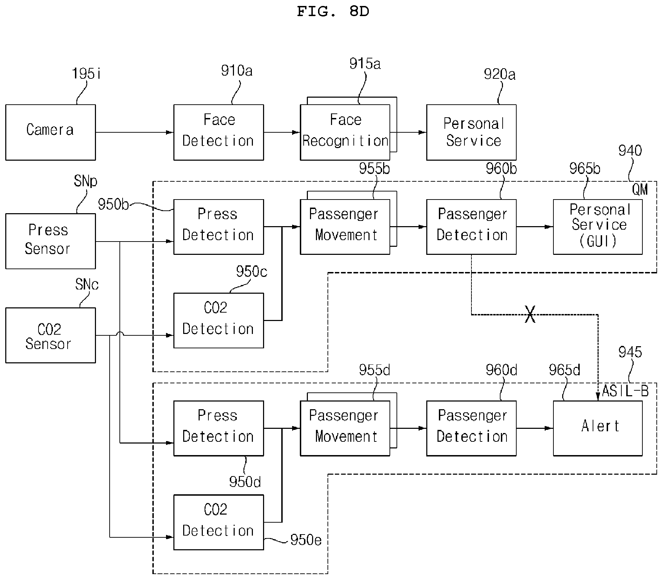

. FIG. 8D illustrates execution of a plurality of microservices corresponding to ASIL B and a microservice corresponding to QM.

. Referring to the drawing, the signal processing device 170 according to an embodiment of the present disclosure may be configured to execute a passenger monitoring application 940 corresponding to QM, similarly to FIG. 8C.

. For example, the signal processing device 170 according to an embodiment of the present disclosure may be configured to execute, as a plurality of microservices, the passenger seating microservice 950b, the passenger movement microservice 955b, the passenger detection microservice 960b, and the graphics provision microservice 965b, for the passenger monitoring application 940 corresponding to QM.

. Meanwhile, the signal processing device 170 according to an embodiment of the present disclosure may further execute the gas detection (CO₂ detection) microservice 950c for the passenger monitoring application 940 corresponding to QM.

. Meanwhile, the signal processing device 170 according to an embodiment of the present disclosure may be configured to execute, as a plurality of microservices, the face detection microservice 910a, the face recognition microservice 915a, and the personal microservice 920a unrelated to the passenger monitoring application 940.

. Meanwhile, the signal processing device 170 according to an embodiment of the present disclosure may further execute a passenger monitoring application 945 corresponding to ASIL B.

. In the drawing, a plurality of microservices for the passenger monitoring application 945 corresponding to ASIL B are illustrated as including a passenger seating microservice 950d, a passenger movement microservice 955d, a passenger detection microservice 960d, and an alert microservice 965d.

. Meanwhile, the passenger seating microservice 950d is executed based on the sensor data from the pressure sensor SNp, and the result data of the passenger seating microservice 950d is transmitted to the passenger movement microservice 955d.

. Meanwhile, the passenger movement microservice 955d is executed based on the result data of the passenger seating microservice 950d, and the result data of the passenger movement microservice 955d is transmitted to the passenger detection microservice 960d.

. Meanwhile, the passenger detection microservice 960d is executed based on the result data of the passenger movement microservice 955d, and the result data of the passenger detection microservice 960d is transmitted to the alert microservice 965d.

. Meanwhile, the alert microservice 965d is executed based on the result data of the passenger detection microservice 960d, and the result data of the alert microservice 965d may be transmitted to the audio output device 185 and output.

. Meanwhile, the signal processing device 170 according to an embodiment of the present disclosure may further execute a gas detection (CO₂ detection) microservice 950e for the passenger monitoring application 945 corresponding to ASIL B.

. Meanwhile, the gas detection (CO₂ detection) microservice 950e is executed based on the sensor data from the gas sensor SNc, and the result data of the gas detection (CO₂ detection) microservice 950e may be transmitted to the passenger movement microservice 955d.

. Meanwhile, the signal processing device 170 according to an embodiment of the present disclosure may be configured to not transmit the result data of the passenger detection microservice 960b among the microservices in the passenger monitoring application 940 corresponding to QM to the alert microservice 965d in the passenger monitoring application 945 corresponding to ASIL B.

. That is, since the safety level of the passenger detection microservice 960b in the passenger monitoring application 940 corresponding to QM is lower than the safety level of the alert microservice 965d in the passenger monitoring application 945 corresponding to ASIL B, the signal processing device 170 according to an embodiment of the present disclosure cannot transmit the result data of the passenger detection microservice 960b to the alert microservice 965d in the passenger monitoring application 945 corresponding to ASIL B. Accordingly, each safety level may be maintained.

. FIG. 8E illustrates another example of execution of a plurality of microservices corresponding to ASIL B and a microservice corresponding to QM based on camera data from the internal camera 195i.

. Referring to the drawing, the signal processing device 170 according to an embodiment of the present disclosure may be configured to execute a driver monitoring system (DMS) application 985 corresponding to ASIL B, similarly to FIG. 8B.

. The driver monitoring system (DMS) application 985 is similar to the driver monitoring system (DMS) application 905 of FIG. 8B but has a difference in that the second face detection microservice 910c is not performed.

. For example, the signal processing device 170 according to an embodiment of the present disclosure may be configured to execute, as a plurality of microservices, , the face detection microservice 910b, the eye movement microservice 915b, the head movement microservice 915c, the eye tracking microservice 920b, and the alert microservice 930b, for the driver monitoring system (DMS) application 985 corresponding to ASIL B.

. Meanwhile, the head movement microservice 915c is executed based on the result data of the face detection microservice 910b, and the result data of the head movement microservice 915c is transmitted to the eye tracking microservice 920b.

. Meanwhile, the signal processing device 170 according to an embodiment of the present disclosure may be configured to execute the third face detection microservice 910a, the face recognition microservice 915a, and the personal microservice 920a as a plurality of microservices that are not related to ASIL B.

. Meanwhile, the signal processing device 170 according to an embodiment of the present disclosure may be configured to execute an augmented reality microservice 930c as a microservice corresponding to QM.

. At this time, the signal processing device 170 according to an embodiment of the present disclosure may transmit the result data of the eye tracking microservice 920b among the microservices in the application 985 corresponding to ASIL B to the augmented reality microservice 930c corresponding to QM, which has a lower safety level.

. Accordingly, the augmented reality microservice 930c corresponding to QM is executed based on the result data of the eye tracking microservice 920b, and the result data of the augmented reality microservice 930c may be transmitted to the display 180 and displayed.

. FIG. 9 is an example of an internal block diagram of the signal processing device according to an embodiment of the present disclosure.

. Referring to the drawing, the signal processing device 170 in a system 1000 according to an embodiment of the present disclosure has a processor 175 that is configured to execute the hypervisor 505.

. Meanwhile, the processor 175 may correspond to the central processor (CPU) of FIG. 6.

. Meanwhile, the processor 175 may have a plurality of processor cores.

. In the drawing, the plurality of processor cores are illustrated as operating based on the safety level of ASIL B, but various modifications may be made.

. For example, some of the plurality of processor cores may operate based on the safety level of ASIL B, and others may operate based on the safety level of QM.

. Meanwhile, the signal processing device 170 according to an embodiment of the present disclosure may further include a second processor 177 including an M core or a micom unit (MCU) for executing applications of the highest safety level, ASIL D.

. Meanwhile, the processor 175 is configured to execute a plurality of virtual machines 810 to 830 on the hypervisor 505.

. Meanwhile, among the plurality of virtual machines 810 to 830, the first virtual machine 830 is configured to execute a plurality of microservices 910b, 915b, 920b, and 930b corresponding to a first safety level, such as ASIL B.

. Meanwhile, among the plurality of virtual machines 810 to 830, the first virtual machine 830 transmits the result data of the first microservice 920b among the plurality of microservices to the second virtual machine 820 among the plurality of virtual machines 810 to 830 corresponding to a second safety level lower than the first safety level or to a virtual machine within the second signal processing device 170Z. Accordingly, it is possible to perform an update of an application while the application is running. Furthermore, it is possible to perform efficient data processing using the microservice.

. Meanwhile, the first virtual machine 830 may be configured to execute a plurality of microservices separately in order to execute a first application corresponding to the first safety level.

. That is, among the plurality of virtual machines 810 to 830, the first virtual machine 830 may separately execute the face detection microservice 910b, the eye movement microservice 915b, the eye tracking microservice 920b, and the alert microservice 930b as a plurality of microservices for the driver monitoring system (DMS) application 905 corresponding to the first safety level, such as ASIL B.

. Meanwhile, the second virtual machine 820 may be configured to execute a second application corresponding to the second safety level, and the second application may be executed based on the result data of the first microservice 920b.

. For example, among the plurality of virtual machines 810 to 830, the second virtual machine 820 may be configured to execute the augmented reality microservice 930c as a microservice corresponding to the second safety level, QM, as shown in FIG. 8B.

. Meanwhile, among the plurality of virtual machines 810 to 830, the second virtual machine 820 may be configured to execute the face recognition microservice 915a as a microservice corresponding to the second safety level, QM, as shown in FIG. 8B.

. Meanwhile, among the plurality of virtual machines 810 to 830, the second virtual machine 820 may be configured to execute the augmented reality microservice 930c as a microservice corresponding to QM.

. Meanwhile, the first virtual machine 830 may transmit the result data of the eye tracking microservice 920b among the microservices in the application 905 corresponding to ASIL B to the augmented reality microservice 930c corresponding to QM, which has a lower safety level.

. That is, the first virtual machine 830 may transmit the result data of the eye tracking microservice 920b among the microservices in the application 905 corresponding to ASIL B to the augmented reality microservice 930c in the second virtual machine 820 with a lower safety level, as shown in FIG. 8B.

. Specifically, the first virtual machine 830 may be configured to execute each of the face detection microservice 910b, the eye movement microservice 915b, the eye tracking microservice 920b, and the alert microservice 930b based on the received camera data and transmit the result data of the eye tracking microservice 920b to the second virtual machine 820 corresponding to the second safety level.

. Meanwhile, the second virtual machine 820 may be configured to execute the augmented reality microservice 930c based on the result data of the eye tracking microservice 920b and control the display 180 to display the result data of the augmented reality microservice 930c as shown in FIG. 8B.

. In this manner, the separate eye tracking microservice 920b needs not be executed within the second virtual machine 820, it is possible to perform an update of the application while the application is running.

. Meanwhile, the first virtual machine 830 may transmit the result data of the first microservice 920b to at least one virtual machine corresponding to the second safety level, which is lower than the first safety level, using the shared memory 508.

. Meanwhile, the first virtual machine 830 may transmit the result data of the first microservice 920b to the second virtual machine 820 corresponding to the second safety level lower than the first safety level by using the shared memory 508.

. Meanwhile, the first virtual machine 830 may transmit the result data of the eye tracking microservice 920b to the augmented reality microservice 930c within the second virtual machine 820 by using the shared memory within the hypervisor 505.

. In this manner, when the shared memory 508 is used when transmitting the result data, 1:n result data may be transmitted.

. Meanwhile, the second virtual machine 820 may be configured to not transmit the result data of the microservice being executed or the result data of the application to the first virtual machine 830.

. That is, the second virtual machine 820 may be configured to not transmit data to the first virtual machine 830 with a higher safety level.

. For example, the result data of the face recognition microservice 915a in the second virtual machine 820 may not be transmitted to the first virtual machine 830. Accordingly, the safety level of each virtual machine may be maintained.

. Meanwhile, the first virtual machine 830 among the plurality of virtual machines 810 to 830 may be configured to not transmit the result data of the first microservice 920b among the plurality of microservices to the virtual machine with a third safety level higher than the first safety level.

. For example, if the third virtual machine 810 among the plurality of virtual machines 810 to 830 has the third safety level higher than the first safety level as ASIL D, the first virtual machine 830 may be configured to not transmit the result data of the first microservice 920b among the plurality of microservices to the third virtual machine 810 of the third safety level higher than the first safety level or the fourth virtual machine 840. Accordingly, the safety level of each virtual machine may be maintained.

. Meanwhile, some cores of the processor 175 may be configured to execute the first virtual machine 830, and other cores of the processor 175 may be configured to execute the second virtual machine 820.

. In the drawing, it is illustrated that some cores of the processor 175 execute the first virtual machine 830 corresponding to the first safety level, ASIL B, and other cores of the processor 175 execute the second virtual machine 820 corresponding to the second safety level, QM. Accordingly, it is possible to perform an update of the application while the application is running.

. Meanwhile, the second processor 177 may be configured to execute an application or virtual machine of the highest safety level, ASIL D.

. Meanwhile, the safety level of the application or virtual machine running on the second processor 177 may be higher than the first safety level. Accordingly, it is possible to perform an update of the application while the application is running.

. Meanwhile, the second virtual machine 820 may be configured to execute the face recognition microservice 915a based on the received camera data and execute an additional microservice, the personal microservice 920a, based on the result data of the face recognition microservice, as shown in FIG. 8D.

. Meanwhile, the second virtual machine 820 may be configured to execute each of the passenger seating microservice 950b, the passenger movement microservice 955b, the passenger detection microservice 960b, and the graphics provision microservice 965b for the passenger monitoring application 940 corresponding to QM based on the received sensor data or camera data and may be configured to not transmit the service result data of the passenger detection microservice 960b to the first virtual machine 830 , as shown in FIG. 8D.

. Meanwhile, if the service result data of the passenger detection microservice 960b is not received from the second virtual machine 820, the first virtual machine 830 may be configured to execute each of the passenger seating microservice 950d, the passenger movement microservice 955d, the passenger detection microservice 960d, and the alert microservice 965d for the passenger monitoring application 945 corresponding to ASIL B, based on the received sensor data or camera data, as shown in FIG. 8D. Accordingly, it is possible to perform an update of the application while the application is running.

. Meanwhile, the first virtual machine 830 in the signal processing device 170 according to another embodiment of the present disclosure is configured to execute the first application and transmit the result data or intermediate result data of the first application to the second virtual machine 820 or a virtual machine in the second signal processing device 170Z corresponding to the second safety level. Accordingly, it is possible to perform an update of the application while the application is running. In addition, data processing may be performed efficiently using microservices.

. Meanwhile, the first virtual machine 830 may be configured to execute the first application including a plurality of microservices and transmit result data of at least some of the plurality of microservices to the second virtual machine 820 or the second signal processing device 170Z.

. FIG. 10 is an example of an internal block diagram of a signal processing device according to another embodiment of the present disclosure.

. Referring to the drawing, the signal processing device 170 in a system 1000b according to another embodiment of the present disclosure may transmit data to the second signal processing device 170 or receive data from the second signal processing device 170.

. Referring to a difference from FIG. 9, the second signal processing device 170z may be a zonal signal processing device.

. The second signal processing device 170z includes a processor 175z that is configured to execute a hypervisor 505z.

. Meanwhile, the processor 175z in the second signal processing device 170z may have a plurality of processor cores.

. Meanwhile, the second signal processing device 170z may further include a separate processor 177z including an M core or an MCU (micom unit) for executing applications of the highest safety level, ASIL D.

. Meanwhile, the processor 175z may be configured to execute at least one virtual machine 830z on the hypervisor 505.

. Meanwhile, the separate processor 177z may be configured to execute a virtual machine 840z corresponding to the highest safety level, ASIL D, on the M core.

. Meanwhile, the camera data from the internal camera 195i may be transmitted to the signal processing device 170 or the second signal processing device 170z.

. In the drawing, it is illustrated that the virtual machine 830z in the processor 175z is configured to execute a video stream application 993 based on the camera data.

. Meanwhile, the processor 175 in the signal processing device 170 may receive sensor data or camera data from the second signal processing device 170z.

. Meanwhile, the first virtual machine 830 in the signal processing device 170 may be configured to execute a plurality of microservices corresponding to the first safety level based on the sensor data or camera data, and, as shown in FIG. 8B, may transmit result data of a first microservice 920b among the plurality of microservices to the second virtual machine 820 corresponding to the second safety level lower than the first safety level.

. Meanwhile, the first virtual machine 830 in the signal processing device 170 may be configured to execute a plurality of microservices corresponding to the first safety level based on the sensor data or camera data and transmit the result data of the first microservice 920b among the plurality of microservices to a virtual machine in the second signal processing device 170z corresponding to the second safety level lower than the first safety level.

. For example, the first virtual machine 830 in the signal processing device 170 may transmit the result data of the eye tracking microservice 920b to the virtual machine 830z in the second signal processing device 170z corresponding to the same safety level, ASIL B.

. Accordingly, the virtual machine 830z in the second signal processing device 170z may not separately execute the eye tracking microservice 920b, and thus may perform an update of the application while the application is running.

. FIG. 11 is a flowchart illustrating an operating method of a signal processing device according to an embodiment of the present disclosure.

. Referring to the drawing, the processor 175 in the signal processing device 170 according to an embodiment of the present disclosure may be configured to execute a plurality of microservices for execution of an application while a vehicle is driving.

. Meanwhile, the processor 175 in the signal processing device 170 according to an embodiment of the present disclosure may receive update data of an application from an external mobile terminal 800 or a server 900 (S1110).

. For example, the processor 175 in the signal processing device 170 may receive update data of a plurality of microservices in an application from an external mobile terminal 800 or a server 900 (S1110).

. Specifically, the processor 175 in the signal processing device 170 may receive update data of a first microservice while a first application is running.

. Next, the processor 175 may perform an update based on the received update data (S1120).

. For example, the processor 175 in the signal processing device 170 may update a second microservice corresponding to a duplication of the first microservice based on the update data of the first microservice while the first application is running.

. Next, the processor 175 may control the operation by distributing a load of the updated second microservice and the first microservice (S1130).

. For example, after the update of the second microservice is completed, the processor 175 may control the load of the second microservice to sequentially increase in response to the first microservice and the second microservice being operated. Accordingly, the update of the application may be performed while the application is running. In particular, the update of the microservice may be performed while the microservice is running. Furthermore, data processing may be performed efficiently using the microservice.

. Meanwhile, the processor 175 may check a safety level of the microservice while the application is running before the update.

. For example, the processor 175 may check whether the safety level of the microservice is ASIL D, ASIL C, ASIL B, ASIL A, or QM. ASIL D may be the highest safety level, and QM may be the lowest safety level.

. Meanwhile, the processor 175 may transmit the result data of the microservice to the next microservice according to the completion of execution of each microservice.

. At this time, the processor 175 may control the result data to be transmitted only when the safety level of the result data of the executed microservice is higher than or equal to the safety level of the received microservice.

. Meanwhile, if the safety level of the result data of the executed microservice is lower than the safety level of the received microservice, the processor 175 does not transmit the result data. Accordingly, the microservice or application may be executed based on the safety level.

. FIGS. 12A to 19 are diagrams referenced in the operation description of FIG. 11.

. FIG. 12A illustrates executing a plurality of microservices 1412, 1414, and 1416 for executing a first application 1410.

. Referring to the drawing, the processor 175 may be configured to execute the plurality of microservices 1412, 1414, and 1416 for executing the first application 1410.

. Meanwhile, the result data of a first microservice 1413 is input to the second microservice 1414, the result data of the second microservice 1414 is input to the third microservice 1416, and the result data of the third microservice 1416 is output.

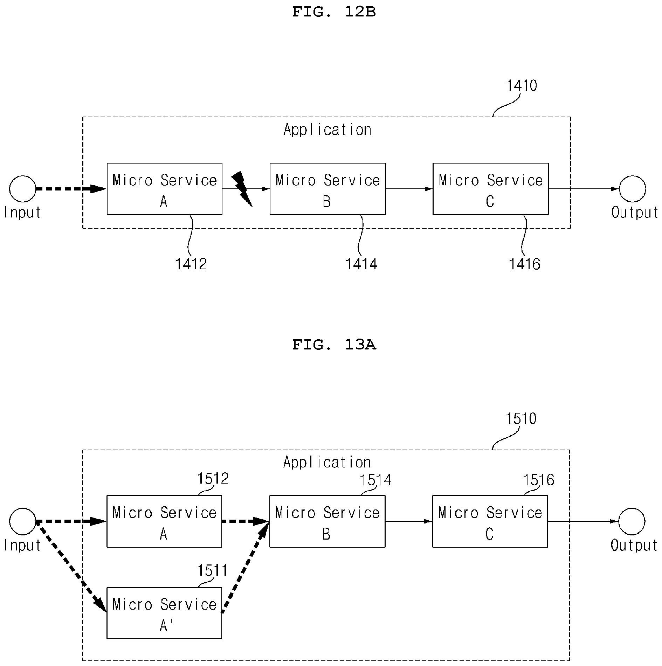

. FIG. 12B is a diagram illustrating an update of the first microservice of FIG. 12A.

. Referring to the drawing, if update data of the first microservice 1413 is received during execution of the first application 1410, when the first microservice 1413 is updated, the execution of the first microservice 1413 is stopped.

. Therefore, during the update of the first microservice 1413, the result data of the first microservice 1413 is not output and the execution of the second microservice 1414, the third microservice 1416, etc. is stopped or postponed. Therefore, there is a disadvantage that a considerable amount of time is required for the update.

. Therefore, in this disclosure, a method for performing an update of an application while the application is running is proposed. In particular, a method for performing an update of a microservice while the microservice is being executed is proposed. This is described with reference to FIG. 13A and the subsequent drawings.

. FIG. 13A is a diagram illustrating an example of an update of a microservice within the first application 1510.

. Referring to the drawing, the processor 175 according to an embodiment of the present disclosure is configured to execute each of a plurality of microservices 1512, 1514, and 1516 for execution of a first application 1510.

. Meanwhile, the result data of a first microservice 1513 is input to the third microservice 1514, the result data of a third microservice 1514 is input to a fourth microservice 1516, and the result data of a fourth microservice 1516 is output.

. Meanwhile, when update data of the first microservice 1512 is received during the operation of the first microservice 1512 among the plurality of microservices 1512, 1514, and 1516, the processor 175 updates a second microservice 1511 corresponding to a duplication of the first microservice 1512.

. Also, after the update of the second microservice 1511 is completed, the processor 175 controls the operation by distributing a load to each of the first microservice 1512 and the second microservice 1511.

. Accordingly, the update of the application may be performed while the application is running. In particular, the update of the microservice may be performed while the microservice is running. Furthermore, data processing may be performed efficiently using the microservice.

. Meanwhile, after the update of the second microservice 1511 is completed, the processor 175 may control the load of the second microservice 1511 to increase sequentially when the first microservice 1512 and the second microservice 1511 operate.

. For example, immediately after the update of the second microservice 1511 is completed, the processor 175 may control a load sharing ratio of the second microservice 1511 to be set to the smallest and then sequentially increase a load sharing ratio of the second microservice 1511.

. That is, immediately after the update of the second microservice 1511 is completed, the processor 175 may control the load sharing ratio of the first microservice 1512 to be set to the largest and then sequentially decrease the load sharing ratio of the first microservice 1512.

. Meanwhile, as the load of the second microservice 1511 is controlled to increase sequentially, after the first microservice 1512 and the second microservice 1511 operate together, the processor 175 may control the operation of the first microservice 1512 to be terminated and only the second microservice 1511 to operate. Accordingly, the update of a microservice may be performed while the microservice is being executed.

. Also, upon termination of the operation of the first microservice 1512, the processor 175 may be configured to execute the third microservice 1514 based on the result data of the second microservice 1511 and execute the fourth microservice 1516 based on the result data of the third microservice 1514.

. Meanwhile, before performing an update of the second microservice 1511, the processor 175 may be configured to execute the third microservice 1514 based on the result data of the first microservice 1512 and determine whether a data reception period of the first microservice 1512 is shorter than an expected update time of the first microservice 1512.

. Also, if the data reception period of the first microservice 1512 is shorter than the expected update time of the first microservice 1512, the processor 175 may update the second microservice 1511 corresponding to a duplication of the first microservice 1512.

. Meanwhile, if the data reception period of the first microservice 1512 is longer than or equal to the expected update time of the first microservice 1512, the processor 175 may update the first microservice 1512 instead of executing or updating the second microservice 1511. Accordingly, the update of the first microservice may be performed.

. Meanwhile, after the update of the second microservice 1511, the processor 175 may perform the update of the microservice corresponding to the third microservice 1514 based on the result data of the updated second microservice 1511.

. Meanwhile, after the update of the microservice corresponding to the third microservice 1514, the processor 175 may perform an update of the microservice corresponding to the fourth microservice 1516.

. In this manner, the processor 175 may control the updates of a plurality of microservices 1512, 1514, and 1516 within the first application to be performed sequentially. Accordingly, the update of the application may be performed while the application is running.

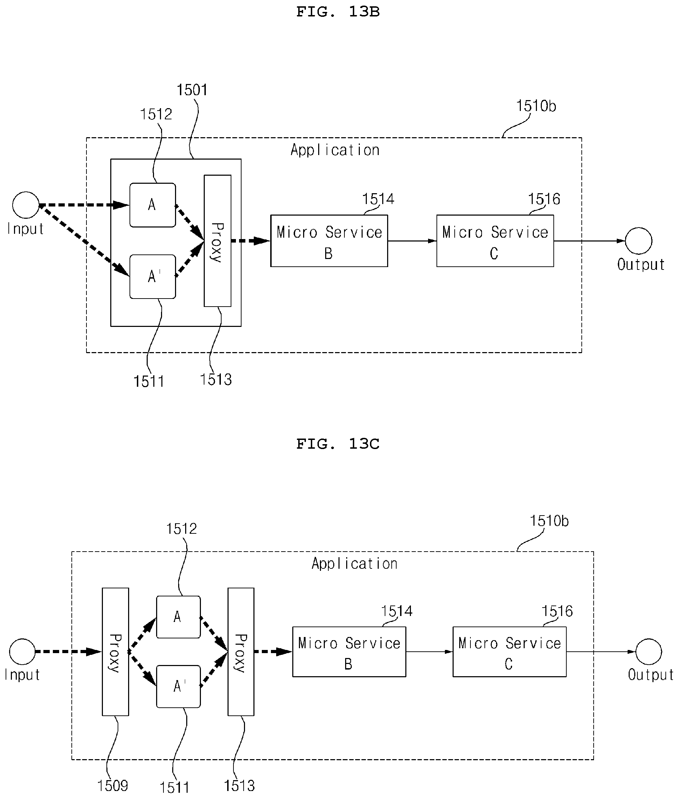

. FIG. 13B is a diagram illustrating another example of an update of a microservice within a first application 1510b.

. Referring to the drawing, an update method of a microservice of FIG. 13B is similar to that of FIG. 13A but is different in that a proxy 1513 is further executed.

. Meanwhile, the processor 175 controls the first microservice 1512 and the second microservice 1511 to be executed in parallel and may adjust the result data output from the first microservice 1512 or the second microservice 1511 through the executed proxy 1513.

. Accordingly, an update of the microservice may be performed while the microservice is being executed. Furthermore, data processing may be performed efficiently by using the microservice.

. Meanwhile, the proxy 1513 may perform traffic control of the first microservice 1512 and the second microservice 1511.

. Meanwhile, the proxy 1513 may output the determined output data to the outside according to a load balancing criterion at a corresponding time.

. FIG. 13C is a diagram illustrating another example of an update of a microservice within the first application 1510b.

. Referring to the drawing, an update method of the microservice of FIG. 13C is similar to that of FIG. 13A but is different in that the first proxy 1509 and the second proxy 1513 are further executed.

. Meanwhile, the processor 175 may be configured to execute the first proxy 1509 to distribute input data to each of the first microservice 1512 and the second microservice 1511 and execute the second proxy 1513 to adjust the result data output from the first microservice 1512 or the second microservice 1511.

. Accordingly, the update of a microservice may be performed while the microservice is being executed. Furthermore, data processing may be performed efficiently using the microservice.

. Meanwhile, the first proxy 1509 may distribute input data according to the load balancing criterion.

. Meanwhile, the second proxy 1513 may output determined output data to the outside according to the load balancing criterion at the corresponding time.

. Meanwhile, the first proxy 1509 and the second proxy 1513 may be configured to maintain indexing through a sink based on the shared memory 508.

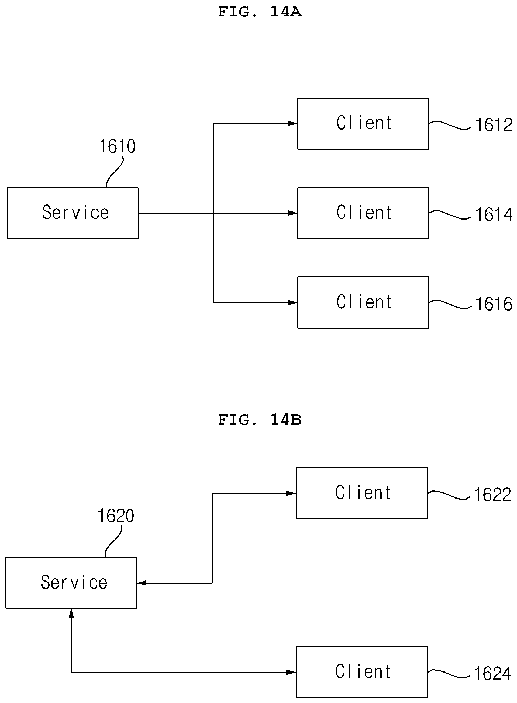

. FIG. 14A illustrates an example of a communication method between a client and a service.

. Referring to the drawing, a service 1610 may collectively transmit messages to a plurality of clients 1612, 1614, and 1616 that are subscribing.

. This method may be referred to as a publish subscribe method and may be used in SOA Framework, SOME/IP, DDS, etc.

. FIG. 14B illustrates another example of a communication method between a client and a service.

. Referring to the drawing, a service 1620 may transmit messages to clients 1622 and 1624 in the form of a response corresponding to a request.

. This method may be referred to as a request response method and may be used in REST, gRPC, etc.

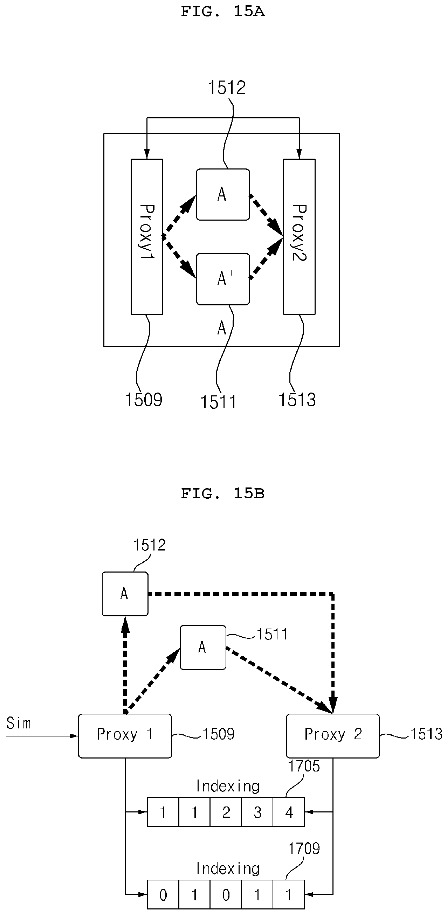

. FIGS. 15A and 15B are diagrams illustrating an example of a sink method between a first proxy and a second proxy.

. First, FIG. 15A illustrates that a first proxy 1509 is executed at input ends of a first microservice 1512 and a second microservice 1511, and a second proxy 1513 is executed at output ends of the first microservice 1512 and the second microservice 1511.

. Meanwhile, the first proxy 1509 may distribute input data according to the load balancing criterion.

. Meanwhile, the second proxy 1513 may output the determined output data to the outside according to the load balancing criteria at that time.

. FIG. 15B is a diagram illustrating indexing between the first proxy and the second proxy.

. Referring to the drawing, the processor 175 distributes the input data based on the transition time information (e.g., 60 seconds) between the first microservice 1512 and the second microservice 1511.

. For example, the processor 175 distributes the first microservice 1512 and the second microservice 1511 so that a distribution ratio of the first microservice 1512 and the second microservice 1511 starts from 100:0 and sequentially varies to 0:100 during a transition time.

. In the drawing, indexing 1705 and load balancing 1709 are illustrated.

. Meanwhile, the first proxy 1509 and the second proxy 1513 may control indexing and distribution target sink through a sink.

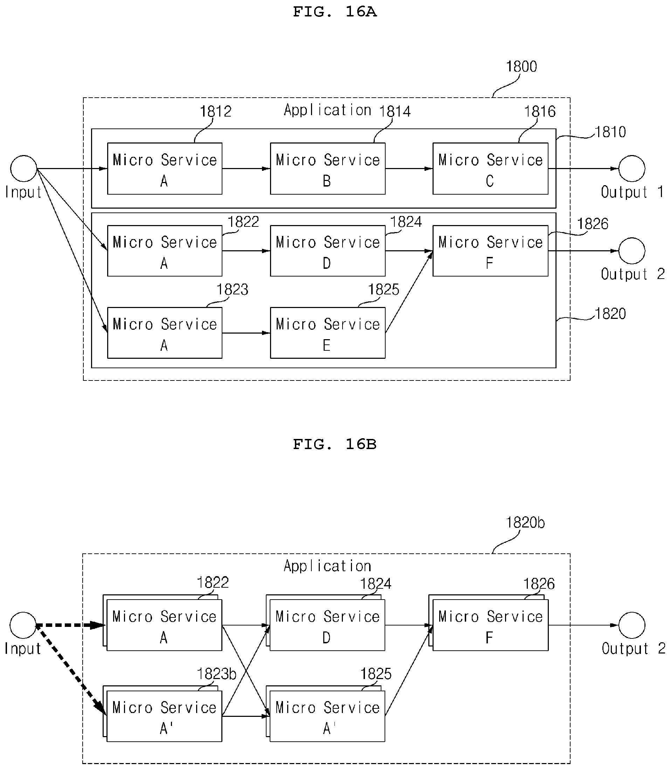

. FIG. 16A illustrates an example of a configuration of a plurality of pipelines for updating a microservice.

. Referring to the drawing, the processor 175 may be configured to execute a plurality of microservices 1812, 1814, and 1816 based on the first pipeline 1810 for executing an application 1800.

. The plurality of microservices 1812, 1814, and 1816, that is, microservice A 1812, microservice B 1814, and microservice C 1816, are each connected in series to transmit result data to the next microservice.

. Meanwhile, the result data, which is the execution result of the plurality of microservices 1812, 1814, and 1816, may be output as a first output.

. Meanwhile, in response to executing the plurality of microservices 1812, 1814, and 1816, the processor 175 may configure a new second pipeline 1820 separate from the first pipeline 1810 based on the first microservice 1812 to update the second microservice, etc.

. That is, the processor 175 may configure the microservice based on the second pipeline 1820 to be parallel or serially mixed for updating at least one of the plurality of microservices 1812, 1814, and 1816.

. In the drawing, it is illustrated that the A microservice 1822, D microservice 1824, and F microservice 1826, which are the plurality of microservices 1822, 1824, and 1826 corresponding to the plurality of microservices 1812, 1814, and 1816, are connected in series with each other, and the A microservice 1823 and E microservice 1825, which are the microservices 1823 and 1825 connected in parallel with some of the plurality of microservices 1822, 1824, and 1826, are connected in series with each other.

. Meanwhile, the result data, which is the execution result of the microservice 1826 in the second pipeline 1820, may be output as a second output separate from the first output.

. That is, the processor 175 may output the multi-output-based result data based on the first pipeline and the second pipeline.

. Accordingly, duplication of a pipeline unit is possible, and verification of the pipeline unit is possible.

. FIG. 16B illustrates another example of a configuration of a plurality of pipelines for updating microservices.

. Referring to the drawing, the processor 175 may be configured to execute a plurality of microservices 1822, 1824, and 1826 for executing an application 1820b or a pipeline 18020b.

. Meanwhile, the processor 175 may be configured to execute a plurality of microservices 1823b and 1824 separately from the plurality of microservices 1822, 1824, and 1826 so that the result data of each microservice may be controlled to be mixed and transmitted in a serial and parallel manner.

. Meanwhile, the result data, which is the execution result of the microservice 1826, may be output as a single output.

. That is, the processor 175 may output single output-based result data based on a first pipeline including a plurality of microservices 1822, 1824, and 1826 and a second pipeline including a plurality of microservices 1823b and 1824.

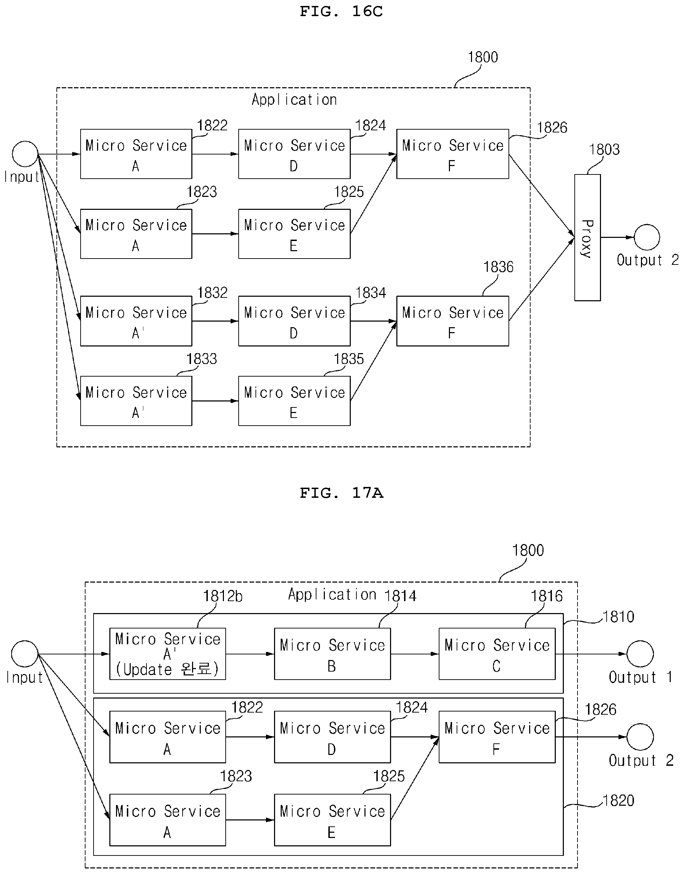

. FIG. 16C illustrates another example of a configuration of a plurality of pipelines for updating microservices.

. Referring to the drawing, the processor 175 may be configured to execute a plurality of microservices 1822, 1824, and 1826 based on the first pipeline for executing the application 1800.

. In the drawing, it is illustrated that the plurality of microservices 1822, 1824, and 1826, i.e., A microservice 1822, D microservice 1824, and F microservice 1826, are connected in series.

. Meanwhile, in parallel with the first pipeline, A microservice 1823 and E microservice 1825 may be connected in series within the second pipeline.

. The result data of D microservice 1824 and the result data of E microservice 1825 may be input to the F microservice 1826, and the result data of F microservice 1826 may be transmitted to the proxy 1803.

. Meanwhile, in parallel with the first pipeline, A' microservice 1832, D microservice 1834, and F microservice 1836 may be connected in series within the third pipeline.

. Meanwhile, in parallel with the third pipeline, A' microservice 1833 and E microservice 1835 may be connected in series in the fourth pipeline.

. The result data of D microservice 1834 and the result data of E microservice 1835 may be input to F microservice 1836, and the result data of F microservice 1836 may be transmitted to the proxy 1803.

. Meanwhile, A' microservice 1832 and A' microservice 1833 are microservices corresponding to A microservice 1822 and A microservice 1823, respectively, and may be microservices that are performing an update.

. Finally, according to FIG. 16C, the processor 175 may output single output-based result data based on a plurality of pipelines.

. FIG. 17A illustrates another example of a configuration of a plurality of pipelines for updating a microservice.

. Referring to the drawing, FIG. 17A illustrates that some updates have been completed compared to FIG. 16A.

. The processor 175 may be configured to execute a plurality of microservices 1812b, 1814, and 1816 based on the first pipeline 1810 for executing the application 1800.

. The plurality of microservices 1812b, 1814, and 1816 may be connected series as A' microservice 1812b, B microservice 1814, and C microservice 1816, respectively.

. Meanwhile, the result data of C microservice 1816 may be output as the first output.

. Meanwhile, A' microservice 1812b may be an updated version of A microservice.

. Meanwhile, A microservice 1822, D microservice 1824, and F microservice 1826 may be connected in series in the second pipeline 20 in parallel with the first pipeline 1810.

. Meanwhile, in parallel with A microservice 1822 and D microservice 1824, A microservice 1823 and E microservice 1825 may be connected in series in the second pipeline 20.

. Meanwhile, the result data of D microservice 1824 and the result data of E microservice 1825 may be input to F microservice 1826, and the result data of F microservice 1826 may be output as a second output.

. Finally, according to FIG. 17A, the processor 175 may output multi-output-based result data based on a plurality of pipelines.

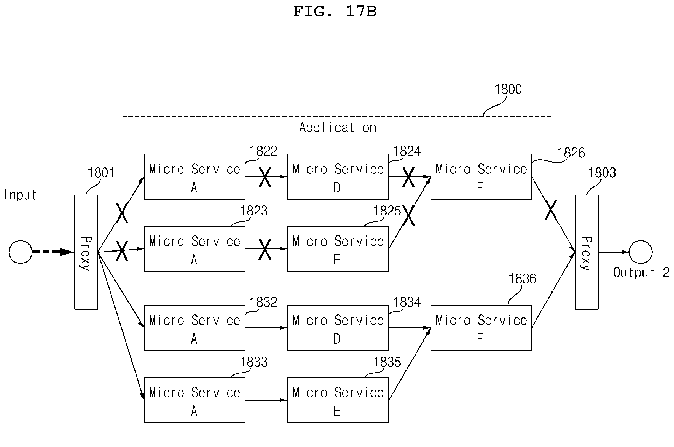

. FIG. 17B illustrates another example of a configuration of a plurality of pipelines for updating microservices.

. Referring to the drawings, FIG. 17B illustrates that some updates have been completed compared to FIG. 16C.

. The processor 175 may be configured to execute the first proxy 1801, which is an input proxy, and the second proxy 1803, which is an output proxy.

. The first proxy 1801, which is an input proxy, may stop the execution of a plurality of micro-services 1822, 1824, and 1826 based on the first pipeline and a plurality of micro-services 1823 and 1825 based on the second pipeline that is parallel to the first pipeline.

. Meanwhile, the first proxy 1801, which is an input proxy, may stop the execution of a plurality of micro-services 1832, 1834, and 1836 based on the third pipeline and a plurality of micro-services 1833 and 1835 based on the fourth pipeline that is parallel to the third pipeline.

. Meanwhile, the second proxy 1803, which is an output proxy, may not output the result data of the F micro-service 1826.

. Meanwhile, the second proxy 1803, which is an output proxy, may be controlled to output the result data of the F microservice 1836.

. Meanwhile, in response to critical data being input during the simultaneous execution of the first microservice 1822 and the second microservice 1832, the processor 175 may provide the critical data only to the second microservice 1832.

. Alternatively, in response to critical data being input during the simultaneous execution of the microservice in the first pipeline and the microservice in the second pipeline, the processor 175 may provide the critical data only to the microservice in the second pipeline. Accordingly, the microservice may be stably performed.

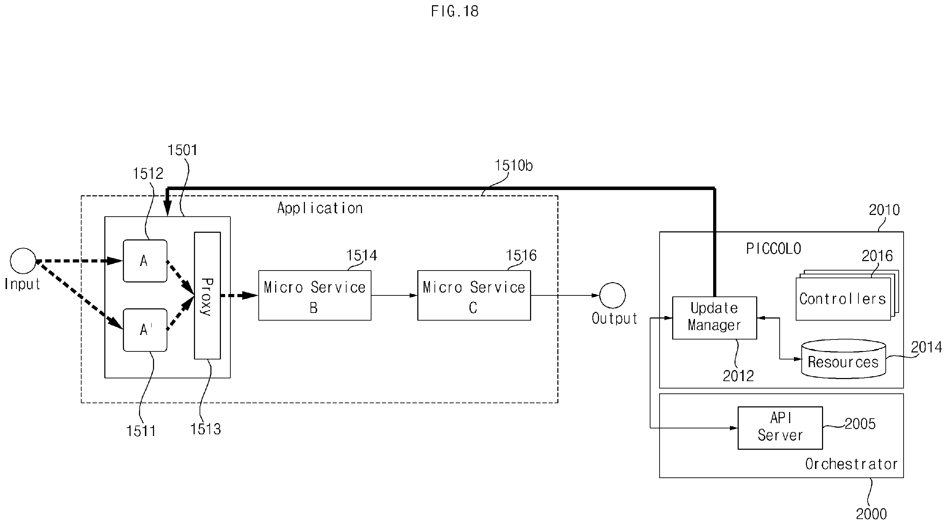

. FIG. 18 illustrates an example of an architecture executed in the processor.

. Referring to the drawing, the processor 175 according to an embodiment of the present disclosure may be configured to execute each of a plurality of microservices 1512, 1514, and 1516 for the execution of the first application 1510.

. At this time, in order to update the first microservice 1512 during the operation of the first microservice 1512, the processor 175 may update the second microservice 1511 corresponding to duplication of the first microservice 1512, and after the update of the second microservice 1511 is completed, the processor 175 may control to distribute and operate a load to each of the first microservice 1512 and the second microservice 1511.

. Meanwhile, the processor 175 may control the execution of the first microservice 1512 and the second microservice 1511 in parallel and may adjust the result data output from the first microservice 1512 or the second microservice 1511 through the executed proxy 1513.

. Meanwhile, the processor 175 may receive data from an orchestrator 2000 including an API server 2005 and execute a microservice.

. Alternatively, the processor 175 may be configured to execute the orchestrator 2000 including the API server 2005 and receive data from the orchestrator 2000 and execute a microservice.

. Alternatively, the processor 175 may receive data from a data provider 2010 including an update manager 2012, a resource 2014, and a controller 2015 and execute a microservice.

. Alternatively, the processor 175 may be configured to execute a data provider 2010 including an update manager 2012, a resource 2014, and a controller 2015, receive data from the data provider 2010, and execute a microservice.

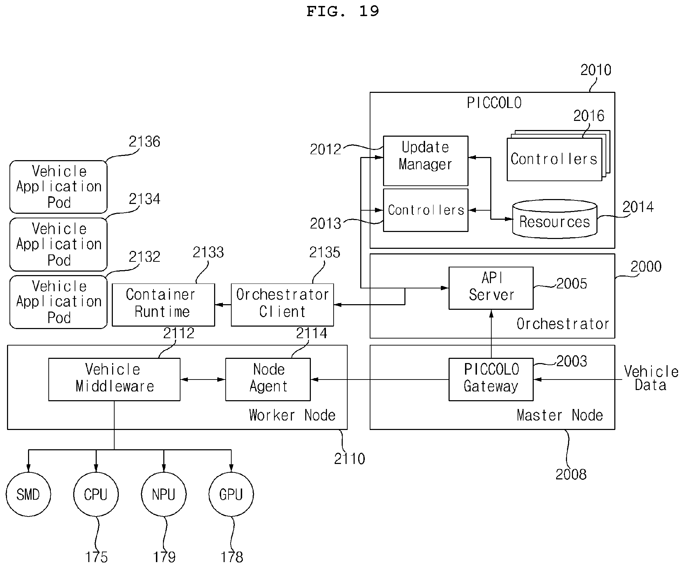

. FIG. 19 illustrates an example of an architecture executed in a signal processing device.

. Referring to the drawing, the signal processing device 170 according to an embodiment of the present disclosure may include a CPU 175, a GPU 178, an NPU 179, etc.

. Meanwhile, the signal processing device 170 may be configured to execute a worker node 2110 including a middleware 2112 and a node agent 2114 through the processor 175, etc., and may be configured to execute applications 2132, 2134, and 2136, a container runtime 2133, and an orchestrator client 2135 on the worker node 2110.

. Meanwhile, the signal processing device 170 may be configured to execute a master node 2008 including a gateway 2003 through the processor 175, execute the orchestrator 2000 including the API server 2005 on the master node 2008, and execute the data provider 2010 on the orchestrator 2000.

. The data provider 2010 may include an update manager 2012, a resource 2014, and the controller 2015.

. Meanwhile, the node agent 2114 may exchange data with the gateway 2005.

. Meanwhile, the orchestrator client 2135 may exchange data with the API server 2005, or the update manager 2012, or the controller 2015.

. As described above, a signal processing device and a vehicle display apparatus including the same according to an embodiment of the present disclosure include: a processor configured to execute a first application, wherein the processor is configured to execute each of a plurality of microservices to execute the first application, to update a second microservice corresponding to a duplication of the first microservice to update the first microservice during an operation of the first microservice among the plurality of microservices, to distribute a load to each of the first microservice and the second microservice after completion of the update of the second microservice and control the operation of the first microservice and the second microservice. Accordingly, it is possible to perform an update of an application while the application is running. In particular, it is possible to perform an update of a microservice while the microservice is running. Furthermore, it is possible to perform data processing efficiently using a microservice.

. Meanwhile, after the completion of the update of the second microservice, the processor may be configured to sequentially increase a load of the second microservice during the operation of the first microservice and the second microservice. Accordingly, it is possible to perform an update of an application while the application is running.

. Meanwhile, the processor may be configured to terminate the operation of the first microservice and to operate only the second microservice after the operation of the first microservice and the second microservice. Accordingly, it is possible to perform an update of a microservice while the microservice is running.

. Meanwhile, the processor may be configured to execute a third microservice based on result data of the first microservice, and in response to a data reception period of the first microservice being less than an expected update time of the first microservice, the processor may be configured to update the second microservice corresponding to the duplication of the first microservice.. Accordingly, it is possible to perform an update of a microservice while the microservice is running.

. Meanwhile, the processor may be configured to update the first microservice, not the execution or update of the second microservice, in response to the data reception period of the first microservice being greater than or equal to an expected update time of the first microservice. Accordingly, an update of the first microservice may be performed.

. Meanwhile, the processor may be configured to control the first microservice and the second microservice to be executed in parallel and to adjust the result data output from the first microservice or the second microservice through an executed proxy. Accordingly, it is possible to perform an update of a microservice while the microservice is running. Furthermore, it is possible to perform data processing efficiently using a microservice.

. Meanwhile, the processor may be configured to execute a first proxy for distributing input data to each of the first microservice and the second microservice and to execute a second proxy for adjusting result data output from the first microservice or the second microservice. Accordingly, it is possible to perform an update of a microservice while the microservice is running. Furthermore, it is possible to perform data processing efficiently using a microservice.

. Meanwhile, the first proxy and the second proxy may be configured to maintain indexing through a shared memory-based sink. Accordingly, it is possible to perform an update of a microservice while the microservice is running. Furthermore, it is possible to perform data processing efficiently using a microservice.

. Meanwhile, the processor may be configured, in response to a third microservice being executed based on the result data of the first microservice, to update the second microservice corresponding to duplication of the first microservice to update the first microservice, and to update a fourth microservice corresponding to the third microservice based on result date of the updated second microservice. Accordingly, it is possible to perform an update of a microservice while the microservice is running. Furthermore, it is possible to perform data processing efficiently using a microservice.

. Meanwhile, the processor, in response to executing the plurality of microservices, may be configured to configure a new second pipeline separate from a first pipeline based on the first microservice and to update the second microservice. Accordingly, it is possible to perform an update of a microservice while the microservice is running. Furthermore, it is possible to perform data processing efficiently using a microservice.

. Meanwhile, the processor may be configured to output single output-based result data based on the first pipeline and the second pipeline. Accordingly, it is possible to perform an update of a microservice while the microservice is running. Furthermore, it is possible to perform data processing efficiently using a microservice.

. Meanwhile, the processor may be configured to output multi-output based result data based on the first pipeline and the second pipeline. Accordingly, it is possible to perform an update of a microservice while the microservice is running. Furthermore, it is possible to perform data processing efficiently using a microservice.

. Meanwhile, the processor may be configured to sequentially perform update for each of the plurality of microservices. Accordingly, it is possible to perform an update of a microservice while the microservice is running. Furthermore, it is possible to perform data processing efficiently using a microservice.

. Meanwhile, the processor may be configured to provide, in response to critical data being input during a simultaneous execution of the first microservice and the second microservice, the critical data only to the second microservice. Accordingly, it is possible to perform an update of a microservice while the microservice is running. Furthermore, it is possible to perform data processing efficiently using a microservice.

. Meanwhile, the processor may be configured to execute a hypervisor and to execute a plurality of virtual machines on the hypervisor, and a first virtual machine among the plurality of virtual machines is configured to execute the plurality of microservices corresponding to a first safety level and transmit result data of the plurality of microservices or result data of some of the plurality of microservices to a second virtual machine among the plurality of virtual machines corresponding to a second safety level lower than the first safety level or a virtual machine within a second signal processing device. Accordingly, data processing may be performed efficiently based on the safety level.

. Meanwhile, the second virtual machine may be configured to execute a second application corresponding to the second safety level, and the second application may be executed based on the result data of the first microservice. Accordingly, data processing may be performed efficiently based on the safety level.

. Meanwhile, the second virtual machine may be configured to not transmit result data of the microservice being executed or result data of the application to the first virtual machine. Accordingly, data processing may be performed efficiently based on the safety level.

. Meanwhile, a core of the processor may be configured to execute the first virtual machine, and another core of the processor may be configured to execute the second virtual machine. Accordingly, data processing may be performed efficiently based on the safety level.

. Meanwhile, the first virtual machine may be configured to execute a plurality of microservices corresponding to the first safety level based on input sensor data or camera data and transmit result data of the first microservice among the plurality of microservices to a second virtual machine corresponding to the second safety level lower than the first safety level. Accordingly, data processing may be performed efficiently based on the safety level.

## Claims

1. A signal processing device (170) comprising:
a processor (175) configured to execute a first application,
wherein the processor (175) is configured to:
execute each of a plurality of microservices to execute the first application,
update a second microservice corresponding to a duplication of the first microservice to update the first microservice during an operation of the first microservice among the plurality of microservices,
distribute a load to each of the first microservice and the second microservice after completion of the update of the second microservice and control the operation of the first microservice and the second microservice, and
terminate the operation of the first microservice and operate only the second microservice after the operation of the first microservice and the second microservice.

2. The signal processing device of claim 1, wherein the processor (175) is configured to sequentially increase the load of the second microservice in response to the first microservice and the second microservice being operated after the update of the second microservice is completed.

3. The signal processing device of any one of claims 1 to 2, wherein the processor (175) is configured to execute a third microservice based on result data of the first microservice, and in response to a data reception period of the first microservice being less than an expected update time of the first microservice, the processor is configured to update the second microservice corresponding to the duplication of the first microservice.

4. The signal processing device of claim 3, wherein the processor (175) is configured to update the first microservice, not the execution or update of the second microservice, in response to the data reception period of the first microservice being greater than or equal to an expected update time of the first microservice.

5. The signal processing device of any one of claims 1 to 4, wherein the processor (175) is configured to control the first microservice and the second microservice to be executed in parallel and to adjust the result data output from the first microservice or the second microservice through an executed proxy.

6. The signal processing device of any one of claims 1 to 5, wherein the processor (175) is configured to execute a first proxy for distributing input data to each of the first microservice and the second microservice and to execute a second proxy for adjusting result data output from the first microservice or the second microservice.

7. The signal processing device of claim 1, wherein the processor (175) is configured, in response to a third microservice being executed based on the result data of the first microservice, to update the second microservice corresponding to duplication of the first microservice to update the first microservice, and to update a fourth microservice corresponding to the third microservice based on result date of the updated second microservice.

8. The signal processing device of any one of claims 1 to 7, wherein the processor (175), in response to executing the plurality of microservices, is configured to configure a new second pipeline separate from a first pipeline based on the first microservice and to update the second microservice.

9. The signal processing device of any one of claims 1 to 8, wherein the processor (175) is configured to sequentially perform update for each of the plurality of microservices.

10. The signal processing device of any one of claims 1 to 9, wherein the processor (175) is configured to provide, in response to critical data being input during a simultaneous execution of the first microservice and the second microservice, the critical data only to the second microservice.

11. The signal processing device of any one of claims 1 to 10, wherein the processor (175) is configured to execute a hypervisor (505) and to execute a plurality of virtual machines (810~830) on the hypervisor, and
wherein a first virtual machine (830) among the plurality of virtual machines is configured to execute the plurality of microservices corresponding to a first safety level and transmit result data of the plurality of microservices or result data of some of the plurality of microservices to a second virtual machine among the plurality of virtual machines corresponding to a second safety level lower than the first safety level or a virtual machine within a second signal processing device.

12. The signal processing device of claim 11, wherein the second virtual machine (820) is configured to execute a second application corresponding to the second safety level, and the second application is executed based on the result data of the first microservice.

13. The signal processing device of claim 11, wherein the second virtual machine (820) does not transmit result data of the microservice being executed or result data of the application to the first virtual machine.

14. The signal processing device of claim 11, wherein the first virtual machine (830) is configured to execute a plurality of microservices corresponding to the first safety level based on input sensor data or camera data and transmit result data of the first microservice among the plurality of microservices to a second virtual machine corresponding to the second safety level lower than the first safety level.

15. A vehicle display apparatus (100) comprising:
at least one display (180a~180b); and
a signal processing device (170) configured to output an image signal to the display,
wherein the signal processing device (170) comprises the signal processing device of claims 1 to 14.
